# EUROPÄISCHE PATENTSCHRIFT

(11) **EP 1 723 013 B1**
(45) Veröffentlichungstag und Bekanntmachung des Hinweises auf die Patenterteilung: **13.06.2007**
(21) Anmeldenummer: 05732705.8
(22) Anmeldetag: 08.03.2005
(51) Int. Cl.: B60R 22/46

(54) **GURTSTRAFFER**
SEAT-BELT TENSIONER
PRETENSIONNEUR DE CEINTURE DE SECURITE

(30) Priorität: 09.03.2004 DE 102004012173
(43) Veröffentlichungstag der Anmeldung: 22.11.2006
(73) Patentinhaber: TAKATA CORPORATION, Minato-ku, Tokyo 106-8510 (JP)
(72) Erfinder: SCHERZINGER, Walter, 89077 Ulm (DE); SCHNABL, Roland, 89075 Ulm (DE); SCHWER, Thomas, 89257 Illertissen (DE)
(74) Vertreter: Baumgärtel, Gunnar
(86) Internationale Anmeldenummer: PCT/DE2005/000446
(87) Internationale Veröffentlichungsnummer: WO 2005/087553

(56) Entgegenhaltungen:
- EP-A- 0 893 313
- WO-A-01/85495
- DE-C1- 10 162 374
- US-A- 5 788 281
- US-A1- 2002 017 584
- US-A1- 2003 102 659

## Beschreibung

Die Erfindung bezieht sich auf einen Gurtstraffer mit einem Antriebsmotor und einem mit dem Antriebsmotor in Verbindung stehenden Getriebe zum Straffen eines Sicherheitsgurtes.

Ein derartiger Gurtstraffer ist beispielsweise aus der deutschen Offenlegungsschrift DE 197 31 689 A1 bekannt. Der vorbekannte Gurtstraffer weist ein Getriebe auf, welches in Abhängigkeit von Sensorsignalen in unterschiedliche Schaltstellungen steuerbar ist. Die Steuerung des Getriebes erfolgt durch eine die Daten der Sensorsignale verarbeitende elektronische Steuereinrichtung.

Ein derartiger Gurtstraffer ist ebenso aus der US5788281A gemäß dem Oberbegriff des Anspruchs 1 bekannt.

Der Erfindung liegt die Aufgabe zugrunde, einen Gurtstraffer anzugeben, der besonders zuverlässig arbeitet.

Diese Aufgabe wird ausgehend von einem Gurtstraffer der eingangs angegebenen Art erfindungsgemäß durch die kennzeichnenden Merkmale des Anspruchs 1 gelöst. Vorteilhafte Ausgestaltungen des erfindungsgemäßen Gurtstraffers sind in Unteransprüchen angegeben.

Danach ist erfindungsgemäß vorgesehen, dass zwischen dem Getriebe und der Gurtspindel eine Überlastkupplung angeordnet ist, die Drehmomente bis zu einem vorgegebenen maximalen Drehmoment überträgt und bei Überschreiten des maximalen Drehmoments auskuppelt.

Ein wesentlicher Vorteil des erfindungsgemäßen Gurtstraffers besteht darin, dass das Getriebe im Falle eines Fahrzeugunfalls durch die unfallbedingt auftretenden hohen Gurtrückhaltekräfte nicht zerstört werden wird; denn die erfindungsgemäße Überlastkupplung vermeidet, dass kritische bzw. zu große Drehmomente von der Gurtspindel auf das Getriebe übertragen werden. Somit wird sichergestellt, dass der Gurtstraffer auch in Gefahrensituationen zuverlässig arbeitet.

Vorzugsweise wird die Überlastkupplung durch zwei Koppelelemente gebildet, die eine kraftschlüssige Verbindung zwischen dem Getriebe und der Gurtspindel bilden. Die kraftschlüssige Verbindung ist derart ausgebildet, dass sie bei Überschreiten des vorgegebenen maximalen Drehmoments selbsttätig aufgehoben wird.

Besonders einfach und damit vorteilhaft lässt sich die Überlastkupplung durch konusartige Koppelelemente bilden; konkret ist das erste Koppelelement beispielsweise durch einen Innenkonus und das zweite Koppelelement durch einen im Innenkonus kraftschlüssig gehaltenen Außenkonus gebildet.

Als vorteilhaft wird es angesehen, wenn der Gurtstraffer vollständig reversibel ist. Ein reversibler Gurtstraffer ermöglicht es, mit diesem nach einem ersten Unfallereignis, bei dem der Sicherheitsgurt mit dem Gurtstraffer ein erstes Mal gestrafft wurde, den Sicherheitsgurt weitere Male zu straffen. Ein reversibler Gurtstraffer ist somit auch bei einem sogenannten "second impact" (oder weiteren Unfallereignissen) einsatzfähig -

Im Rahmen einer vorteilhaften Weiterbildung des Gurtstraffers ist vorgesehen, dass das Getriebe ein mechanisches Automatikgetriebe ist und lastabhängig selbsttätig schaltet. Ein Vorteil eines mechanischen Automatikgetriebes besteht darin, dass dieses keine zusätzliche elektrische Steuereinrichtung benötigt, die ein Umschalten des Getriebes hervorruft; denn das Umschalten des mechanischen Automatikgetriebes wird selbsttätig lastabhängig durchgeführt. Außerdem kommt ein mechanisches Automatikgetriebe ohne elektrische Verstellelemente, zum Beispiel Elektromagnete oder pyrotechnische Stellelemente, aus, da es - wie bereits erläutert - selbsttätig mechanisch schaltet.

Vorzugsweise ist das Automatikgetriebe zumindest zweigängig und weist einen Kraftübertragungspfad für einen ersten Gang mit einer ersten Übersetzung und zumindest einen weiteren Kraftübertragungspfad für einen zweiten Gang und einer gegenüber der ersten Übersetzung größeren Übersetzung auf.

Bevorzugt weist das Automatikgetriebe ein von dem Antriebsmotor des Gurtstraffers angetriebenes Verbindungszahnrad auf, das sowohl mit dem ersten als auch mit dem zweiten Kraftübertragungspfad zusammenwirkt.

Besonders einfach und damit vorteilhaft lässt sich ein Umschalten vom ersten Kraftübertragungspfad in den zweiten Kraftübertragungspfad erreichen, wenn der erste Kraftübertragungspfad eine Rutschkupplung umfasst, die bei Überschreiten eines vorgegebenen Abschaltmoments auskuppelt, so dass der weitere Kraftübertragungspfad aktiviert wird. Das vorgegebene Abschaltmoment der Rutschkupplung ist vorzugsweise derart bemessen, dass es einer Gurtkraft an der Schulter des Fahrzeuginsassen zwischen 200 und 250 Newton entspricht.

Kostengünstig und damit vorteilhaft lässt sich der erste Kraftübertragungspfad durch die Rutschkupplung, ein mit der Rutschkupplung in Verbindung stehendes Kuppelrad und einen mit der Gurtspindel und dem Kuppelrad in Verbindung stehenden Spindelkupplungszahnkranz bilden.

Die Rutschkupplung weist vorzugsweise einen Klinkenträger auf, der koaxial mit dem Verbindungszahnrad drehbar gelagert ist; auf dem Klinkenträger ist bevorzugt eine Rutschkupplungsklinke derart schwenkbar gelagert, dass diese in eine Kuppelstellung und in eine Auskuppelstellung schwenkbar ist. Die Rutschkupplungsklinke kuppelt in ihrer Kuppelstellung den Klinkenträger und das Verbindungszahnrad; in ihrer Auskoppelstellung ist sie bezüglich der Kupplung zwischen dem Verbindungszahnrad und dem Klinkenträger wirkungslos.

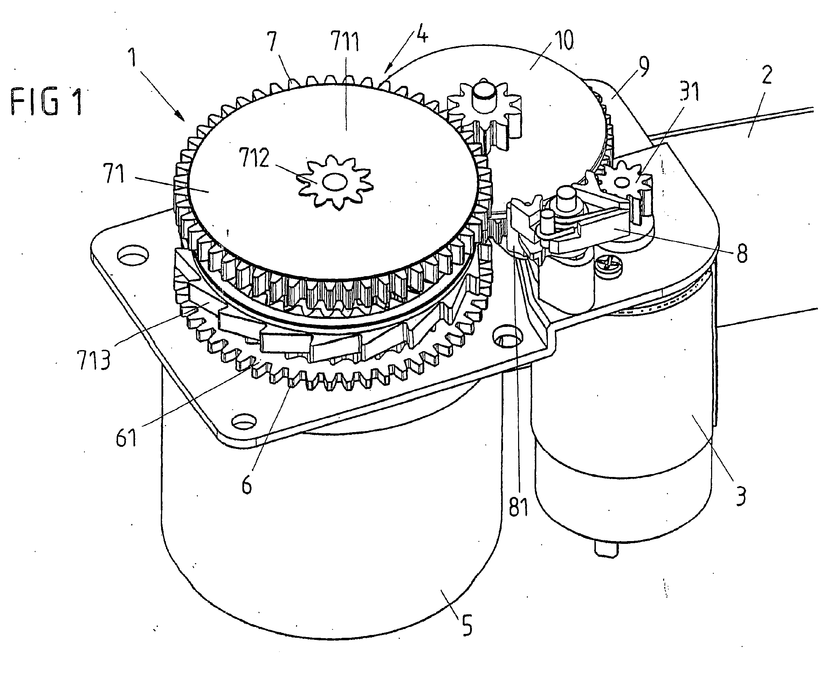

Der Begriff "Gurtstraffdrehrichtung" gibt nachfolgend diejenige Drehrichtung an, bei der der Sicherheitsgurt aufgerollt und somit gestrafft wird. Es wird als bezüglich der Drehrichtung auf die Wirkung abgestellt, die die jeweilige Drehung auf den Sicherheitsgurt hat: Beispielsweise drehen sich bei dem im Zusammenhang mit den Figuren 1 bis 13 erläuterten Ausführungsbeispiel der Antriebsmotor und die Gurtspindel aufgrund des Automatikgetriebes stets in entgegengesetzten Drehrichtungen, trotzdem weisen beide beim Gurtstraffen jeweils die "Gurtstraffdrehrichtung" auf. In entsprechender Weise wird unter dem Begriff "Gurtabrollrichtung" nachfolgend die entgegengesetzte Drehrichtung verstanden, bei der es zu einem Abrollen des Sicherheitsgurtes von der Gurtspindel kommt.

Bevorzugt weist die Rutschkupplung eine Steuerscheibe auf, die verhindert, dass die Rutschkupplungsklinke nach Erreichen ihrer Auskuppelstellung selbsttätig erneut in die Kuppelstellung gelangt. Dies hat zur Folge, dass nach einem Hochschalten des Automatikgetriebes vom ersten Gang in den zweiten Gang - also vom ersten Kraftübertragungspfad in den zweiten Kraftübertragungspfad - ein Zurückschalten vom zweiten Gang in den ersten Gang verhindert wird, solange ein solches Zurückschalten nicht gewünscht ist und zugelassen wird.

Die Steuerscheibe und der Klinkenträger sind beispielsweise um einen vorgegebenen Drehwinkel gegeneinander verdrehbar. Sobald die Rutschkupplungsklinke ihre Auskuppelstellung erreicht hat, wird die Steuerscheibe vorzugsweise durch eine Feder in eine Blockadestellung gedreht, in der sie die Rutschkupplungsklinke in der Auskuppelstellung hält und ein Wiedereinsteuern der Rutschkupplungsklinke in das Verbindungszahnrad unterbindet.

Vorzugsweise weist die Rutschkupplung zusätzlich zu der bereits erwähnten Rutschkupplungsklinke - nachfolgend "erste" Rutschkupplungsklinke genannt - eine zweite Rutschkupplungsklinke auf. Die Funktion der zweiten Rutschkupplungsklinke besteht darin, die erste Rutschkupplungsklinke bei der Kraftübertragung zu unterstützen. Die beiden Rutschkupplungsklinken werden gemeinsam ein- und ausgekuppelt. Die zweite Rutschkupplungsklinke kann beispielsweise auf dem Klinkenträger schwenkbar gelagert sein.

Die beiden Rutschkupplungsklinken sind - bezüglich des Verbindungsrades - vorzugsweise jeweils in Einsteuerrichtung vorgespannt. Aus Kostengründen wird dieses Vorspannen der beiden Rutschkupplungsklinken mit ein und derselben Schwenkfeder bewirkt.

Die Gurtspindel und das Automatikgetriebe sind vorzugsweise mit einer Spindelkupplung miteinander verbunden. Die Spindelkupplung ist bevorzugt derart ausgestaltet, dass sie bei Drehung des Antriebsmotors in Gurtstraffdrehrichtung einkuppelt und bei Drehung des Antriebsmotors in Gurtabrolldrehrichtung bei Lastfreiheit auskuppelt.

Die Spindelkupplung weist vorzugsweise Spindelkupplungsklinken auf, die derart angeordnet sind, dass sie in eine Klinkenverzahnung der Gurtspindel einsteuern, sobald der Spindelkupplungszahnkranz in Gurtstraffdrehrichtung dreht. Dadurch kuppeln die Gurtspindel und der Spindelkupplungszahnkranz drehfest miteinander.

Darüber hinaus sind die Spindelkupplungsklinken vorzugsweise derart angeordnet, dass sie aus der Klinkenverzahnung der Gurtspindel herausgeschwenkt werden, sobald der Spindelkupplungszahnkranz in Gurtabrollrichtung dreht und Lastfreiheit vorliegt. Durch ein solches Herausschwenken der Spindelkupplungsklinken lässt sich die Kuppelverbindung zwischen der Gurtspindel und dem Spindelkupplungszahnkranz trennen, so dass die Gurtspindel nachfolgend wieder frei drehbar wird. Mit anderen Worten kuppeln die Spindelkupplungsklinken also nur in Gurtstraffdrehrichtung, nicht jedoch in Gurtabrollrichtung.

Um sicherzustellen, dass die Spindelkupplungsklinken vollständig in die Klinkenverzahnung der Gurtspindel einsteuern, weist die Spindelkupplung vorzugsweise eine Synchronisationsklinke auf, die in die Klinkenverzahnung der Gurtspindel eingesteuert wird. Dadurch werden die Gurtspindel und der Spindelkupplungszahnkranz zueinander ausgerichtet, bevor die Spindelkupplungsklinken in die Klinkenverzahnung der Gurtspindel eingreifen. Die Funktion der Synchronisierungsklinke besteht also darin, eine vorgegebene, relative Lage zwischen dem Spindelkupplungszahnkranz und den Spindelkupplungsklinken zu erzwingen, bevor es zu einem Einsteuern der Spindelkupplungsklinken in die Klinkenverzahnung der Gurtspindel kommen kann.

Die Spindelkupplungsklinken und die Synchronisationsklinke sind vorzugsweise schwenkbar in oder an einem Spindelkupplungsgehäuse gehalten, das mit der Gurtspindel koaxial ausgerichtet und gegenüber der Gurtspindel drehbar gelagert ist. Das Spindelkupplungsgehäuse kann beispielsweise zweiteilig ausgebildet sein und einen Spindelkupplungsträger und einen damit in Verbindung stehenden Planetenträger aufweisen.

Falls das Automatikgetriebe ein Planetengetriebe aufweist, so wird es als vorteilhaft angesehen, wenn das Spindelkupplungsgehäuse zumindest eine Befestigungsstelle zur drehbaren Befestigung zumindest eines Planetenrades des Planetengetriebes aufweist. Beispielsweise kann das Spindelkupplungsgehäuse drei Befestigungsstellen für drei Planetenräder aufweisen. Die Befestigungsstellen für die Planetenräder können beispielsweise durch Stifte gebildet sein, auf denen die Planetenräder des Planetengetriebes drehbar gelagert sind.

Vorzugsweise ist ein Planetengetriebe im weiteren Kraftübertragungspfad angeordnet. Das Planetengetriebe läuft vorzugsweise bei eingekoppelter Rutschkupplung kraftübertragungsfrei mit und wird erst bei ausgekoppelter Rutschkupplung zur Kraftübertragung herangezogen. Das Planetengetriebe stellt dann den zweiten Gang des Getriebes bereit.

Um ein kraftübertragungsfreies Mitlaufen des Planetengetriebes zu ermöglichen, weist dieses vorzugsweise ein Hohlrad auf, das von zumindest einem Planetenrad angetrieben wird. Ein inneres Sonnenrad dient beispielsweise zum Antrieb des zumindest einen Planetenrades. Mit dem inneren Sonnenrad steht beispielsweise ein äußeres Sonnenrad in Verbindung, das von dem Verbindungszahnrad angetrieben wird. Das innere und das äußere Sonnenrad können durch zwei separate Räder gebildet sein; alternativ können beide Sonnenräder auch durch ein einstückiges Rad gebildet sein.

Vorzugsweise weist das Planetengetriebe eine Planetenkupplungsklinke auf, die mit dem Hohlrad zusammenwirkt und ein Drehen des Hohlrades entlang einer vorgegebenen Hohlraddrehrichtung erlaubt und ein Drehen des Hohlrades entgegen der vorgegebenen Hohlraddrehrichtung sperrt. Mit der Planetenkupplungsklinke lässt sich somit das kraftübertragungsfreie Mitlaufen des Planetengetriebes bei eingekoppelter Rutschkupplung und die Kraftübertragung bei ausgekoppelter Rutschkupplung gewährleisten.

Zur Aktivierung der Planetenkupplungsklinke wird diese beispielsweise durch eine Planetenkupplungsklinkenfeder gegen das Hohlrad geschwenkt.

Um zu ermöglichen, dass nach Abschluss des mit dem Gurtstraffer durchgeführten Straffvorganges die Gurtspindel in der gestrafften Lage arretiert wird, weist der Gurtstraffer vorzugsweise eine Sperreinrichtung auf. Eine solche Sperreinrichtung ermöglicht es, nach Abschluss des Straffvorganges den Antriebsmotor abzuschalten, um ein Überhitzen des Motors sowie eine dauerhafte elektrische Belastung des Bordnetzes zu vermeiden.

Vorzugsweise ist die Sperreinrichtung derart ausgestaltet, dass sie ohne Erhöhung der auf den Fahrzeuginsassen einwirkenden Gurtrückhaltekraft lösbar ist. Bevorzugt ist die Sperreinrichtung mit dem Antriebsmotor des Gurtstraffers lösbar, beispielweise, indem der Antriebsmotor in Gurtabrollrichtung betrieben wird.

Besonders einfach und damit vorteilhaft lässt sich eine solche Sperreinrichtung durch eine Rastklinke realisieren, die sowohl in eine erste und als auch in eine zweite Klinkenposition gebracht werden kann. In der ersten Klinkenposition blockiert die Rastklinke die Gurtspindel in Gurtabrollrichtung, und in ihrer zweiten Klinkenposition gibt sie die Gurtspindel in Gurtabrollrichtung frei.

Vorzugsweise ist die Rastklinke schwenkbar und federnd gehalten, so dass ein Umschalten der Rastklinke von der ersten Klinkenposition in die zweite Klinkenposition bzw. umgekehrt möglich ist. Bevorzugt wird die Rastklinke derart gehalten, dass sie bei Vorliegen einer vorgegebenen Gurtauszugskraft von der ersten Klinkenposition in die zweite Klinkenposition geschwenkt wird. Ein solches Wegschwenken der Rastklinke bewirkt die Freigabe der Gurtspindel in Gurtabrollrichtung; ein Abrollen des Sicherheitsgurtes von der Gurtspindel wird somit möglich, so dass die auf den mit dem Sicherheitsgurt zu schützenden Fahrzeuginsassen wirkende Gurtkraft begrenzt werden kann. Das Abrollen des Sicherheitsgurtes wird vorzugsweise von einem separaten Gurtkraftbegrenzer, beispielsweise einem Torsionsstab, gesteuert bzw. vorgegeben. Alternativ oder zusätzlich kann das Abrollen des Sicherheitsgurtes auch mit dem Antriebsmotor des Gurtstraffers geregelt werden.

Die vorgegebene Gurtauszugskraft, bei der es zu einem Umschalten der Rastklinke von der ersten Klinkenposition in die zweite Klinkenposition kommt, liegt vorzugsweise zwischen 1.000 und 3.000 Newton, beispielsweise bei 2.000 Newton (bezogen auf die Gurtkraft in Schulterhöhe des Fahrzeuginsassen).

Um den Gurtstraffer nach einem Umschalten der Rastklinke von der ersten Klinkenposition in die zweite Klinkenposition wieder "Reaktivieren" zu können, ist die Rastklinke derart ausgestaltet, dass sie sich von der zweiten Klinkenposition wieder in die erste Klinkenposition zurückbewegen lässt. Vorzugsweise ist die Rastklinke derart schwenkbar und federnd gehalten, dass sie allein mithilfe der Antriebskraft des Antriebsmotors von der zweiten Klinkenposition in die erste Klinkenposition zurückgeschwenkt werden kann.

Falls mit dem Gurtstraffer der Gurt gestrafft wurde, ohne dass es nachfolgend tatsächlich zu einem Unfall kommt und ohne dass die Rastklinke in die zweite Klinkenposition gebracht wurde, so lässt sich die Sperreinrichtung vorteilhaft in entsprechender Weise mit dem Antriebsmotor auch entsperren, indem die Rastklinke mit dem Antriebsmotor von der ersten Klinkenposition in die zweite Klinkenposition verstellt wird. Der bei vorbekannten Gurtstraffern auftretende "Löse-Peak" tritt somit nicht auf.

Die Rastklinke kann beispielsweise gemäß einem Kniehebelprinzip schwenkbar gehalten sein, um das Umschwenken von der ersten in die zweite Klinkenposition und umgekehrt zu ermöglichen.

Alternativ kann die Schwenkachse der Rastklinke in einem Langloch der Rastklinke derart angeordnet sein, dass die Rastklinke in Drehrichtung um die Schwenkachse schwenkbar und radial zur Schwenkachse entlang der durch das Langloch gebildeten Führungskulisse auslenkbar ist.

Mit der Rastklinke wirkt vorzugsweise zumindest eine Rastklinkenfeder zusammen, die die Rastklinke gegen das Verbindungszahnrad schwenkt.

Zur Erläuterung der Erfindung zeigen Figuren 1 bis 15 ein Ausführungsbeispiel für einen erfindungsgemäßen Gurtstraffer.

In der Figur 1 erkennt man einen Gurtstraffer 1 zum Straffen eines Sicherheitsgurtes 2. Der Gurtstraffer weist einen Antriebsmotor 3 auf, der mit seinem Motorritzel 31 mit einem Automatikgetriebe 4 in Verbindung steht. Das Automatikgetriebe 4 steht außerdem mit einer Gurtspindel 5 mit einer Gurtrolle in Verbindung.

Von dem Automatikgetriebe 4 erkennt man in der Figur 1 ein Verbindungszahnrad 10, das mit einem ersten Kraftübertragungspfad 6 und einem zweiten Kraftübertragungspfad 7 des Automatikgetriebes 4 in Verbindung steht.

Von dem ersten Kraftübertragungspfad 6 erkennt man in der Figur 1 einen Spindelkupplungszahnkranz 61, der mit dem Verbindungszahnrad 10 gekuppelt ist.

Von dem zweiten Kraftübertragungspfad 7 erkennt man in der Figur 1 ein Planetengetriebe bzw. Planetenradgetriebe 71 mit einem äußeren Sonnenrad 711. Das äußere Sonnenrad 711 steht mit dem Verbindungszahnrad 10 in Eingriff. Mit dem äußeren Sonnenrad 711 ist ein inneres Sonnenrad 712 verbunden, das mit in der Figur 1 nicht sichtbaren Planetenrädern zusammenwirkt. Das Planetenradgetriebe 71 weist darüber hinaus ein Hohlrad 713 auf, dessen Funktionsweise weiter unten erläutert werden wird.

In der Figur 1 sieht man außerdem eine Sperreinrichtung 8 mit einer Rastklinke 81. Die Sperreinrichtung 8 sperrt das Verbindungszahnrad 10 nach erfolgter Gurtstraffung, so dass der Antriebsmotor 3 abgeschaltet werden kann. Die Sperreinrichtung 8 kann nach erfolgter Gurtstraffung wieder deaktiviert werden, indem der Antriebsmotor 3 zumindest kurzzeitig in Gurtabrollrichtung geschaltet wird.

Der Antriebsmotor 3 sowie das Automatikgetriebe 4 sind an einer Montageplatte 9 montiert.

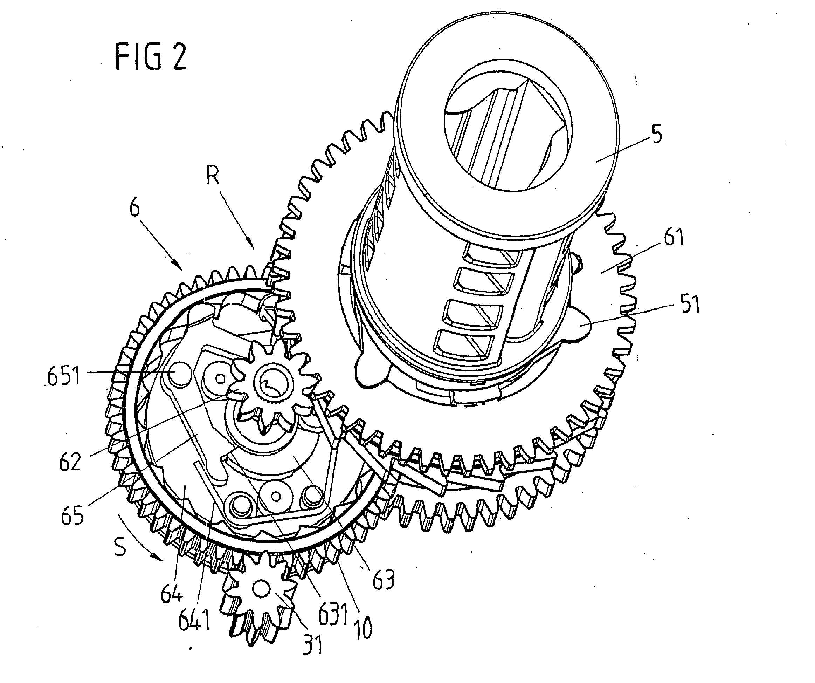

In der Figur 2 ist der erste Kraftübertragungspfad 6 im Detail dargestellt. Man erkennt den Spindelkupplungszahnkranz 61, der mit der Gurtspindel 5 über eine Spindelkupplung 51 in Verbindung steht. Der Spindelkupplungszahnkranz 61 steht außerdem mit einem Kuppelrad 62 in Eingriff.

Die Steuerscheibe 63 ist auf einem Klinkenträger 64 drehbar angebracht, der koaxial mit dem Verbindungszahnrad 10 angeordnet ist. Der Klinkenträger 64 sowie das Verbindungszahnrad 10 sind gegeneinander verdrehbar gelagert. Das Kuppelrad 62 ist mit dem Klinkenträger 64 beispielsweise mittels einer Klauenkupplung drehfest verbunden.

Auf dem Klinkenträger 64 ist eine erste Rutschkupplungsklinke 65 schwenkbar um eine Schwenkachse 651 gelagert. Die Rutschkupplungsklinke 65 wird mittels einer auf dem Klinkenträger 64 befestigten Schwenkfeder 641 derart ausgelenkt, dass sie in Eingriff mit einer Innenverzahnung des Verbindungszahnrades 10 steht. Die Rutschkupplungsklinke 65 ist dabei derart ausgerichtet, dass eine Kraftübertragung zwischen dem Verbindungszahnrad 10 und dem Klinkenträger 64 entlang der Gurtstraffdrehrichtung des Gurtstraffers 1 auftritt. Die Gurtstraffrichtung ist in der Figur 2 mit dem Bezugszeichen S gekennzeichnet.

In der Figur 2 ist erkennbar, dass die Steuerscheibe 63 einen Nocken 631 aufweist, der mit der Rutschkupplungsklinke 65 zusammenwirkt. Die Funktion des Nockens 631 besteht darin, an der Rutschkupplungsklinke 65 anzuliegen, solange die durch die Rutschkupplungsklinke 65, den Klinkenträger 64 sowie die Steuerscheibe 63 gebildete Rutschkupplung R eingekuppelt ist.

In der in der Figur 2 dargestellten Position der Rutschkupplungsklinke 65 findet eine unmittelbare Kraftübertragung zwischen dem Motorritzel 31, dem Verbindungszahnrad 10, dem Kuppelrad 62, dem Spindelkupplungszahnkranz 61 sowie der Gurtspindel 5 statt, da die Spindelkupplung 51 eingekoppelt ist. Die Funktionsweise der Spindelkupplung 51 wird weiter unten erläutert werden.

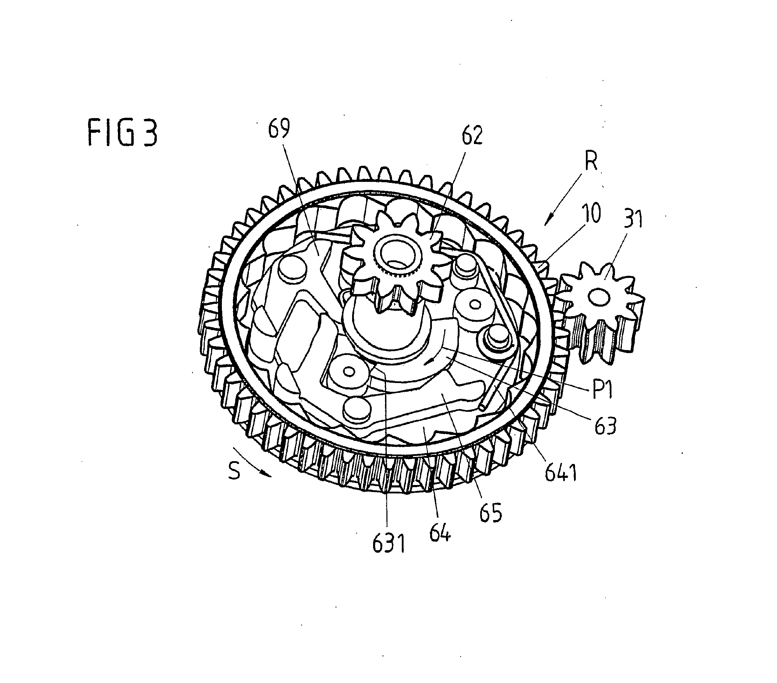

Die Funktionsweise der durch den Klinkenträger 64, die Steuerscheibe 63 sowie das Kuppelrad 62 gebildeten Rutschkupplung R ist in der Figur 3 nochmals in einer Detaildarstellung gezeigt: Sobald das zu übertragende Drehmoment bei einer Drehbewegung entlang der Gurtstraffrichtung S ein vorgegebenes Lastmoment überschreitet, kuppelt die Rutschkupplung aus, indem die Rutschkupplungsklinke 65 entgegen der Federkraft der Schwenkfeder 641 nach innen geschwenkt wird. Wenn es zu einer solchen Schwenkbewegung kommt, wird sich die Steuerscheibe 63 entlang der Pfeilrichtung P1 relativ zu dem Klinkenträger 64 verdrehen, so dass der Nocken 631 an der Rutschkupplungsklinke 65 vorbeigeführt wird. ln dem in der Figur 3 dargestellten Zustand ist die Rutschkupplung R somit ausgekuppelt, da die Rutschkupplungsklinke 65 in ihre Auskuppelstellung gelangt ist.

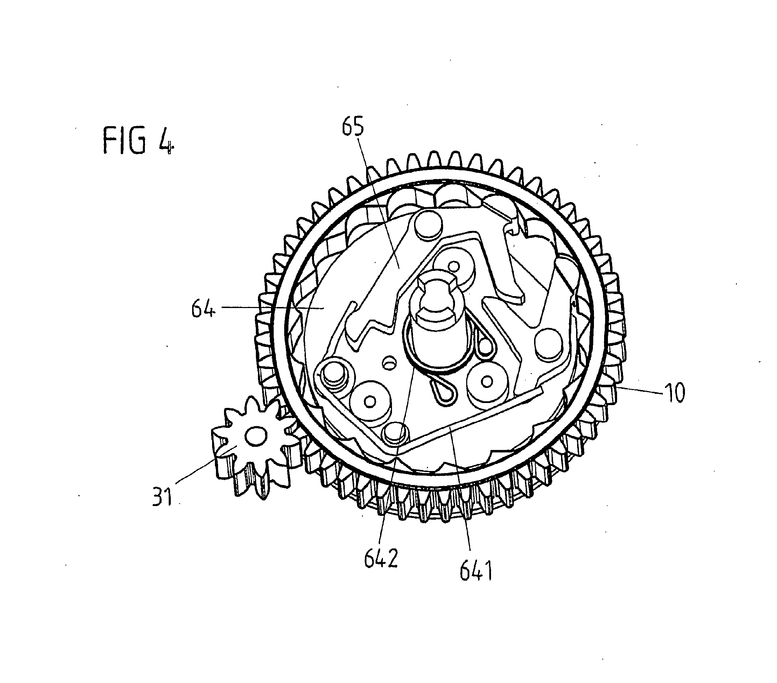

In der Figur 4 erkennt man eine Drehfeder 642, die auf dem Klinkenträger 64 befestigt ist und die in der Figur 4 nicht gezeigte Steuerscheibe 63 auf dem Klinkenträger 64 unter eine Vorspannung setzt. Aufgrund der Drehfeder 642 wird die Steuerscheibe 63 entlang der in der Figur 3 dargestellten Drehrichtung P1 gedreht, sobald die Rutschkupplungsklinke 65 in ihre Auskuppelstellung gelangt ist.

Durch das Verdrehen der Steuerscheibe 63 mit dem Nocken 631 wird erreicht, dass die Rutschkupplungsklinke 65 nach Erreichen ihrer in der Figur 3 dargestellten Auskuppelstellung selbsttätig erneut nicht mehr in die Kuppelstellung gelangen kann. Die Rutschkupplungsklinke 65 bleibt somit nach einem erfolgten Auskuppeln ausgekuppelt.

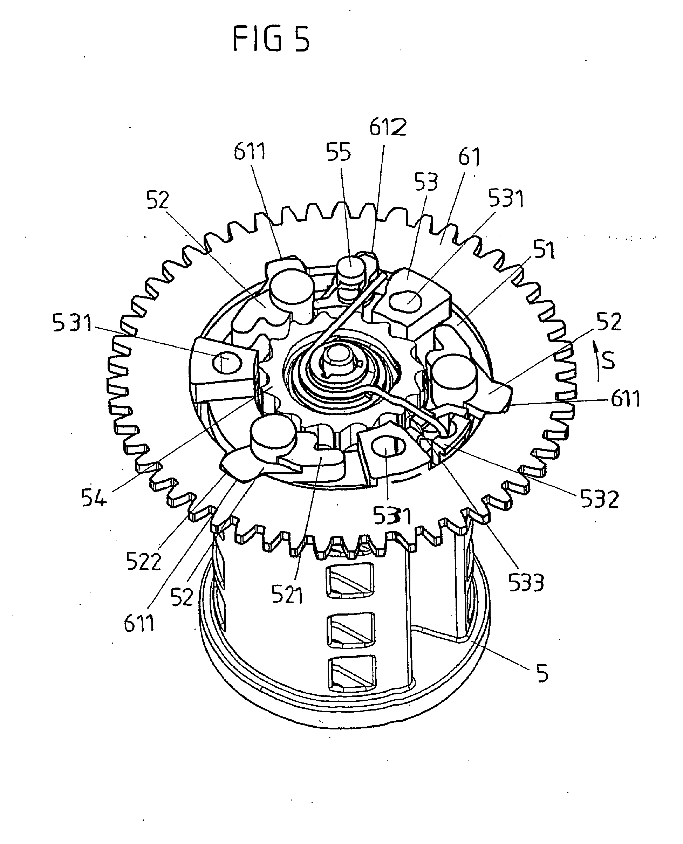

In der Figur 5 ist die bereits im Zusammenhang mit der Figur 2 erwähnte Spindelkupplung 51 der Gurtspindel 5 im Detail gezeigt. Man erkennt drei Spindelkupplungsklinken 52, die in einem Spindelkupplungsgehäuse 53 schwenkbar gehalten sind. Jede der drei Spindelkupplungsklinken 52 weist jeweils einen äußeren Nocken 522 auf, der stets in einer zugeordneten innenrandseitigen Ausnehmung 611 im Spindelkupplungszahnkranz 61 geführt wird.

Jede der Spindelkupplungsklinken 52 weist darüber hinaus zwei innere Klauen 521 auf, die in eine Klinkenverzahnung 54 der Gurtspindel 5 eingreifen Die Klinkenverzahnung 54 der Gurtspindel 5 ist mit der Gurtspindel 5 beispielsweise einstückig verbunden.
Wie sich der Figur 5 entnehmen lässt, wird es bei einem Antreiben des Spindelkupplungszahnkranzes 61 in Gurtstraffdrehrichtung S dazu kommen, dass die inneren Klauen 521 in die Klinkenverzahnung 54 der Gurtspindel 5 eingreifen, so dass es zu einer Kupplung zwischen der Gurtspindel 5 und dem Spindelkupplungszahnkranz 61 kommt.

In der Figur 5 ist darüber hinaus eine Synchronisationsklinke 55 erkennbar. Die Funktion der Synchronisationsklinke 55 besteht darin, eine Kupplung zwischen der Gurtspindel 5 und dem Spindelkupplungszahnkranz 61 herbeizuführen, noch bevor die Spindelkupplungsklinken 52 in Richtung Klinkenverzahnung 54 der Gurtspindel 5 hereinschwenken und einkoppeln. Die Synchronisationsklinke 55 bewirkt somit eine Justage der Spindelkupplungsklinken 52 zur Klinkenverzahnung 54 der Gurtspindel 5, so dass ein definiertes Einkoppeln der Spindelkupplungsklinken 52 in die Klinkenverzahnung 54 der Gurtspindel 5 erfolgen kann. Ein gegenseitiges Blockieren der Spindelkupplungsklinken 52 wird durch die Synchronisationsklinke 55 somit zuverlässig vermieden. Würde nur eine einzige Spindelkupplungsklinke 52 verwendet werden, so könnte auf die Synchronisationsklinke 55 verzichtet werden.

In der Figur 5 sind drei Bohrungen 531 in dem Spindelgehäuse 53 erkennbar. ln die Bohrungen 531 sind Stifte eingesetzt, die Planetenräder des Planetenradgetriebes 71 gemäß Figur 1 tragen. Die Stifte sowie die Planetenräder des Planetenradgetriebes 71 sind in der Figur 5 nicht dargestellt.

In der Figur 5 erkennt man darüber hinaus einen Bremsschuh 532, der mittels einer Bremsschuhfeder 533 radial nach außen gedrückt wird, so dass dieser stets in einer Lagerbohrung der Montageplatte 9 anliegt. Die Funktion des Bremsschuhs 532 besteht darin, ein Klappern des Spindelkupplungsgehäuses 53 gegenüber der Montageplatte 9 zu verhindern. Durch den Bremsschuh 532 werden Herstellungstoleranzen bei der Herstellung des Spindelkopplungsgehäuses 53 sowie der Montageplatte 9 ausgeglichen. Die Bremsschuhfeder 533 hat darüber hinaus eine weitere Funktion, nämlich die Synchronisationsklinke 55 in einer gegenüber der Klinkenverzahnung 54 ausgesteuerten Lage zu halten; beim Einschalten des Antriebsmotors 3 wird die Kraft der Bremsschuhfeder 533 durch die Synchronisationsklinke 55 jedoch überwunden, so dass diese in die Klinkenverzahnung 54 einsteuern kann.

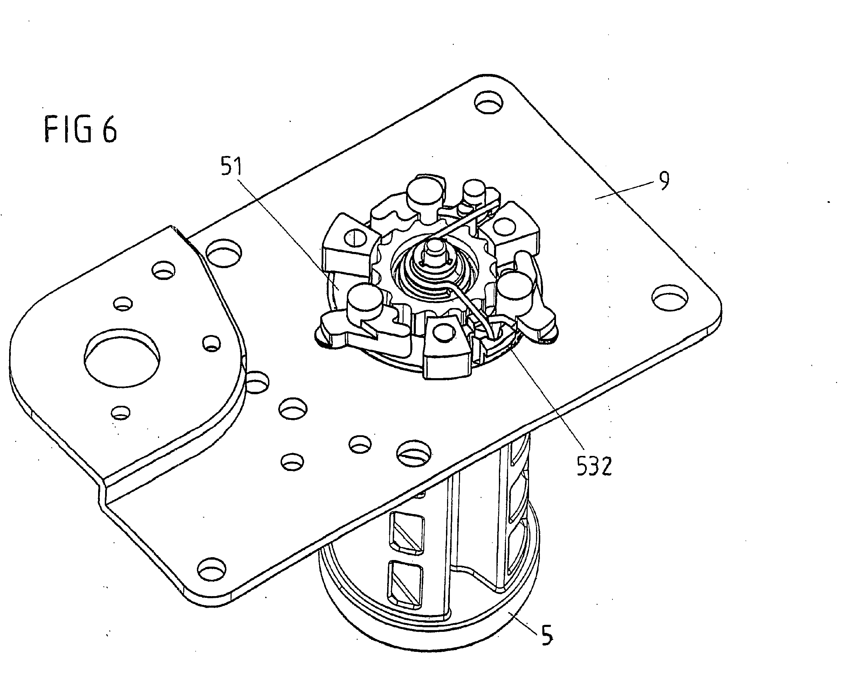

In der Figur 6 ist die Gurtspindel 5 zusammen mit der Spindelkupplung 51 nochmals nach der Montage an der Montageplatte 9 gezeigt.

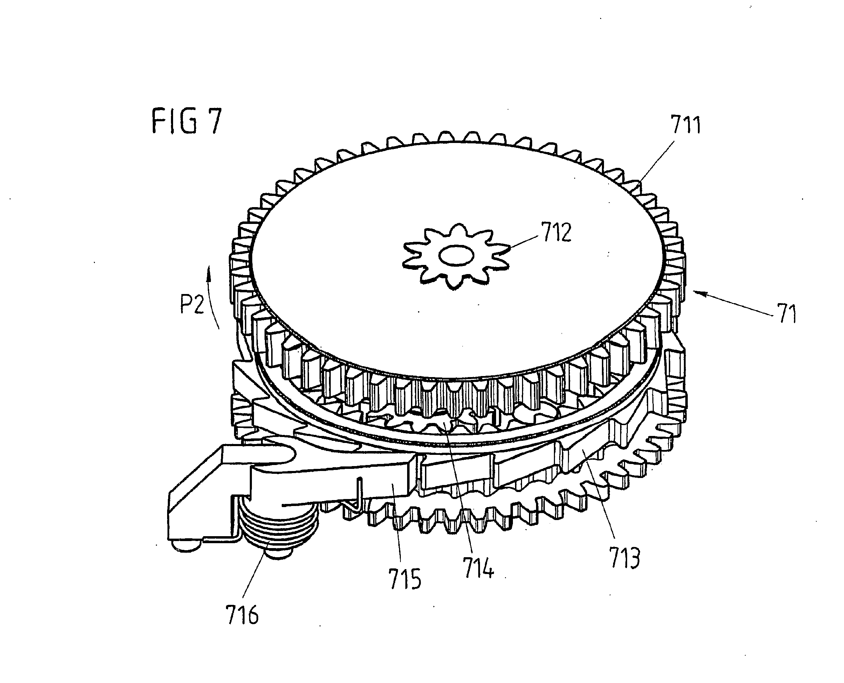

In der Figur 7 ist das Planetengetriebe 71 gemäß Figur 1 nochmals im Detail gezeigt. Man erkennt das äußere Sonnenrad 711 sowie das damit in Verbindung stehende innere Sonnenrad 712, das drei Planetenräder des Planetengetriebes 71 antreibt. Von den drei Planetenrädern ist in der Figur 7 nur ein Planetenrad 714 erkennbar. Das Planetenrad 714 sowie die beiden übrigen Planetenräder sind auf Stiften gehalten, die in den Bohrungen 531 des Spindelkupplungsgehäuses 53 gemäß Figur 5 gehalten werden.

In der Figur 7 ist darüber hinaus das Hohlrad 713 erkennbar, das mit einer Planetenkupplungsklinke 715 zusammenwirkt. Die Planetenkupplungsklinke 715 bewirkt, dass das Hohlrad 713 ausschließlich entgegen der Drehrichtung P2 gedreht werden kann; dabei ratscht die Planetenkupplungsklinke 715 an der äußeren Verzahnung des Hohlrades 713 entlang. Entlang der Drehrichtung P2 sperrt die Planetenkupplungsklinke 715 ein Drehen des Hohlrades 713.

Die Planetenkupplungsklinke 715 wird durch eine Planetenkupplungsklinkenfeder 716 gegen das Hohlrad 713 gedrückt, so dass die bereits erläuterte Sperrwirkung durch die Planetenkupplungsklinke 715 gewährleistet wird.

Die Funktionsweise der Planetenkupplungsklinke 715 besteht darin, ein Mitlaufen des äußeren Sonnenrades 711, des inneren Sonnenrades 712 sowie der Planetenräder 714 des Planetengetriebes 71 zu ermöglichen, ohne dass es zu einer Kraftübertragung zur Gurtspindel 5 kommt. Zu einem kraftübertragungsfreien Mitlaufen des Planetengetriebes 71 kommt es dann, wenn die Rutschkupplung gemäß Figur 1 eingekoppelt ist und die Kraftübertragung entlang des ersten Kraftübertragungspfades 6 erfolgt.

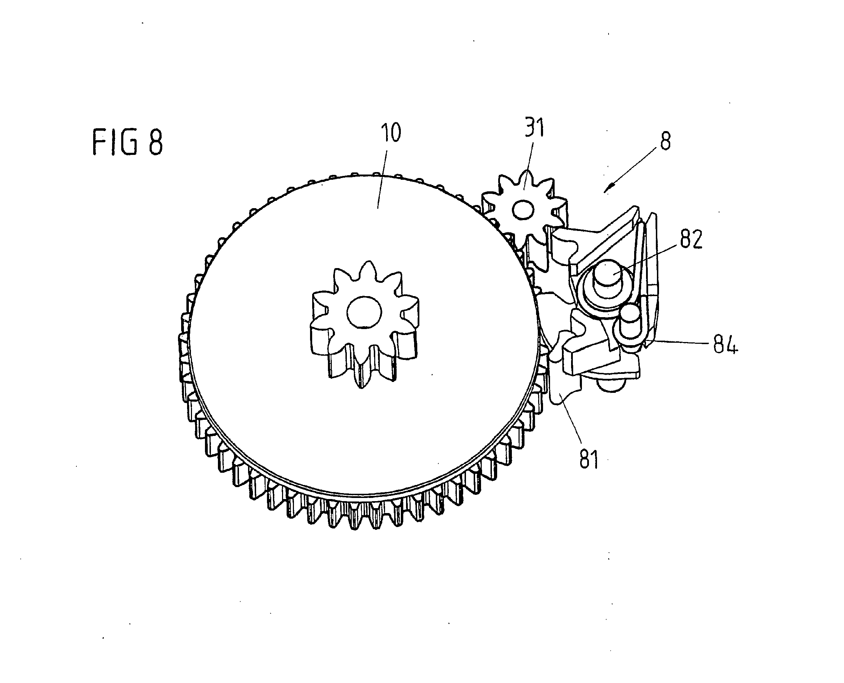

Im Zusammenhang mit den Figuren 8 bis 10 wird nun der Aufbau und die Funktionsweise der Sperreinrichtung 8 gemäß Figur 1 erläutert. Man erkennt in der Figur 8 die Rastklinke 81, die auf einem Lagerstift 82 drehbar gehalten ist. Die Rastklinke 81 wird über das Langloch 83 am Lagerstift 82 geführt.

Mit der Rastklinke 81 steht eine Rastklinkenfeder 84 in Verbindung. Die Funktion der Rastklinkenfeder 84 besteht darin, die Rastklinke 81 gegen das Verbindungszahnrad 10 zu drücken.

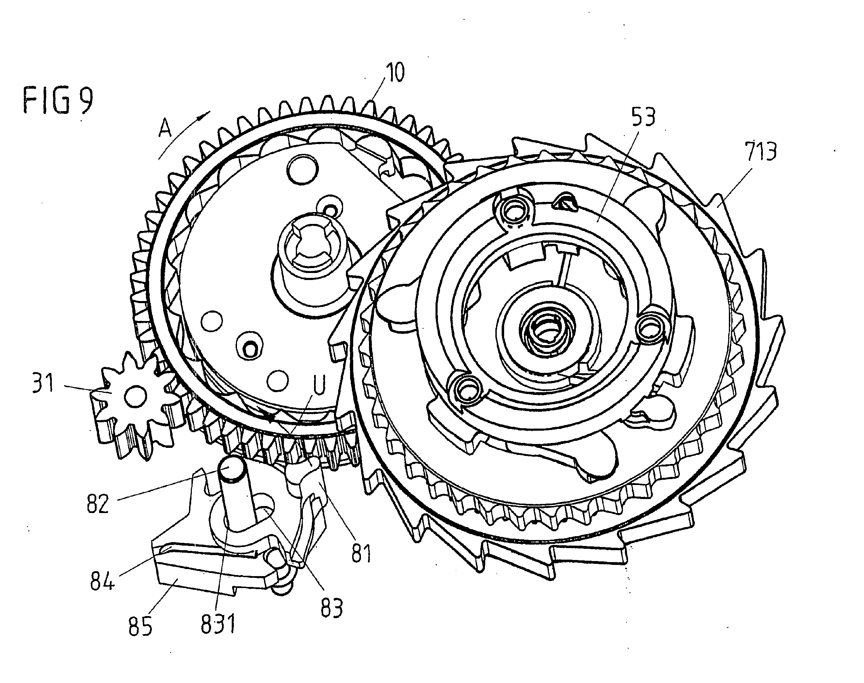

Die Aufgabe der Rastklinke 81 besteht darin, nach einer erfolgten Gurtstraffung durch den Antriebsmotor 3 den Sicherheitsgurt 2 in gestraffter Position zu halten. Dies bewirkt die Rastklinke 81 dadurch, dass sie ein Zurückdrehen des Verbindungszahnrades 10 in Gurtabrollrichtung verhindert. Die Rastklinke 81 sperrt somit das Verbindungszahnrad 10 in Gurtabrollrichtung A. Dies ist in der Figur 9 gezeigt.

In der Figur 9 lässt sich darüber hinaus erkennen, dass es aufgrund der Vielzahl an Rastzähnen an der Außenseite des Verbindungszahnrads 10 möglich ist, den Sicherheitsgurt 2 mit der Rastklinke 81 in fast jeder Position zu halten; ein unerwünschtes Nachgeben des Sicherheitsgurtes 2 durch Spiel in der Sperreinrichtung 8 wird somit begrenzt. Bei dem Ausführungsbeispiel ist das unerwünschtes Nachgeben des Sicherheitsgurtes 2 kleiner als 1,5 Grad (bezogen auf den Drehwinkel der Gurtspindel 5).

Im Falle eines Unfalls wird die auf den Sicherheitsgurt 2 wirkende Gurtauszugskraft stark anwachsen, sobald der mit dem Sicherheitsgurt 2 gehaltene Fahrzeuginsasse gegen den Sicherheitsgurt drückt. Um nun ein Nachgeben des Sicherheitsgurtes 2 zu ermöglichen, damit Verletzungen durch den Sicherheitsgurt vermieden werden, wird die Rastklinke 81 bei Überschreiten einer vorgegebenen maximalen Gurtauszugskraft von der in der Figur 9 dargestellten ersten Klinkenposition ("Rastklinke 81 ist dem Motorritzel 31 abgewandt") in eine zweite Klinkenposition ("Rastklinke 81 ist dem Motorritzel 31 zugewandt") geschwenkt werden (Schwenkrichtung U). Die vorgegebene Gurtauszugskraft liegt vorzugsweise zwischen 1000 und 3000 Newton, beispielsweise bei 2000 Newton (bezogen auf die Gurtkraft an der Schulter des Fahrzeuginsassen).

Die Abrollgeschwindigkeit des Gurtes kann beispielsweise mit dem Antriebsmotor 3 kontrolliert werden, da dessen Motorritzel 31 stets mit dem Verbindungszahnrad 10 in Eingriff steht. Somit kann durch Bestromen des Antriebsmotors 3 in Gurtstraffdrehrichtung das Abrollen des Gurtes gebremst werden.

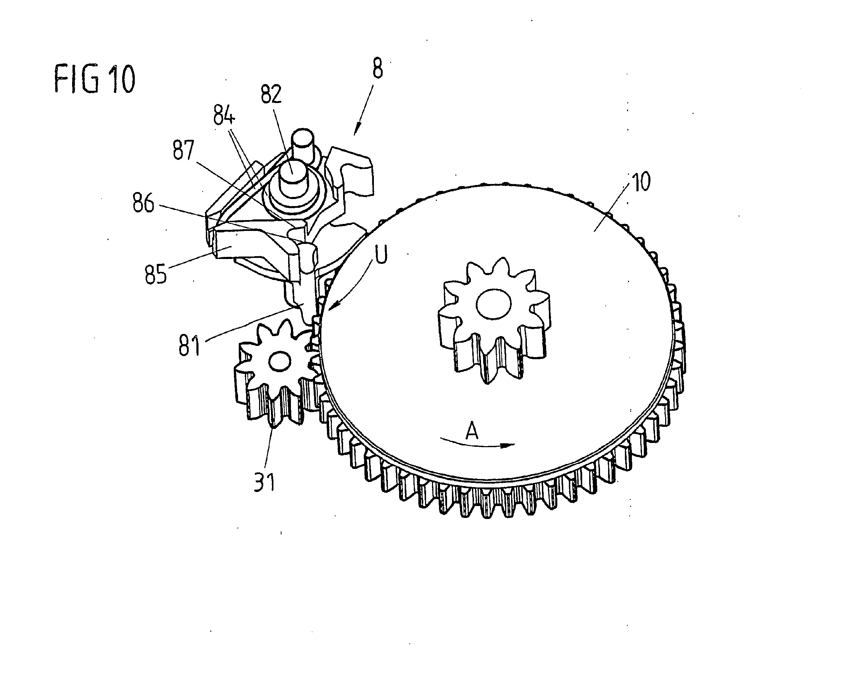

Ein Schwenken der Rastklinke 81 ist möglich, weil die Rastklinke 81 in dem Langloch 83 mit der Rastklinkenfeder 84 elastisch federnd gehalten wird. Bei Überschreiten der vorgegebenen Gurtauszugskraft wird die Rastklinke 81 somit von dem Verbindungszahnrad 10 gegen die Rückstellkraft der Rastklinkenfeder 84 weggedrückt. Dies ermöglicht ein Umschwenken bzw. Umklappen der Rastklinke 81 derart, dass diese in die in der Figur 10 dargestellte zweite Klinkenposition überführt wird (Schwenkrichtung U in den Figuren 9 und 10). Die Rastklinke 81 schwenkt dabei gemeinsam mit einem Rastblock 85. Dies geschieht wie folgt: Bei Erreichen der vorgegebenen Gurtauszugskraft wird die Rastklinke 81 in Richtung Rastblock 85 gedrückt; dabei stößt ein Nocken 86 der Rastklinke 81 an einen Anschlag 87 des Rastblocks 85. Dadurch schwenkt dann der Rastblock 85 um den Lagerstift 82 gegen den Uhrzeigersinn (vgl. Figur 8), so dass die Rastklinke 81 zum Umschwenken gemäß Schwenkrichtung U freigegeben wird und das Umschwenken erfolgt.

In der in der Figur 10 dargestellten zweiten Klinkenposition ("Rastklinke 81 ist dem Motorritzel 31 zugewandt") verhindert die Rastklinke 81 ein Abrollen des Sicherheitsgurtes 2 nicht mehr, so dass der Sicherheitsgurt 2 bei abgeschaltetem Motorantrieb 3 abrollen kann; die Rastklinke gleitet in der zweiten Klinkenposition lediglich am Anlaufbund des Verbindungszahnrades 10 entlang. Dies ermöglicht es, den Sicherheitsgurt 2 mittels weiterer Einrichtungen, beispielsweise einem Torsionsstab, gezielt derart abzurollen, dass es zu einer reduzierten Gurtrückhaltekraft am Fahrzeuginsassen kommt.

Im Zusammenhang mit den Figuren 9 und 10 sei erwähnt, dass die Figur 9 das Verbindungszahnrad 10 von seiner Unterseite und die Figur 10 von seiner Oberseite zeigt. In der Figur 9 erkennt man darüber hinaus das Hohlrad 713 sowie das Spindelkupplungsgehäuse 53 von der Unterseite.

Nachdem im Zusammenhang mit den Figuren 1 bis 10 die Komponenten des Gurtstraffers 1 im Einzelnen erläutert wurden, wird nun zum besseren Verständnis nochmals das Zusammenwirken der Komponenten im Falle eines Fahrzeugunfalls erklärt:

Im Falle eines Fahrzeugunfalls bzw. einer Situation kurz vor einem Unfall wird der Gurtstraffer 1 (vgl. Figur 1) aktiviert. Bei einer solchen Aktivierung wird der Antriebsmotor 3 derart in Betrieb genommen, dass er den Sicherheitsgurt 2 aufrollt und strafft. Der Antriebsmotor 3 wird also in Gurtstraffdrehrichtung betrieben.

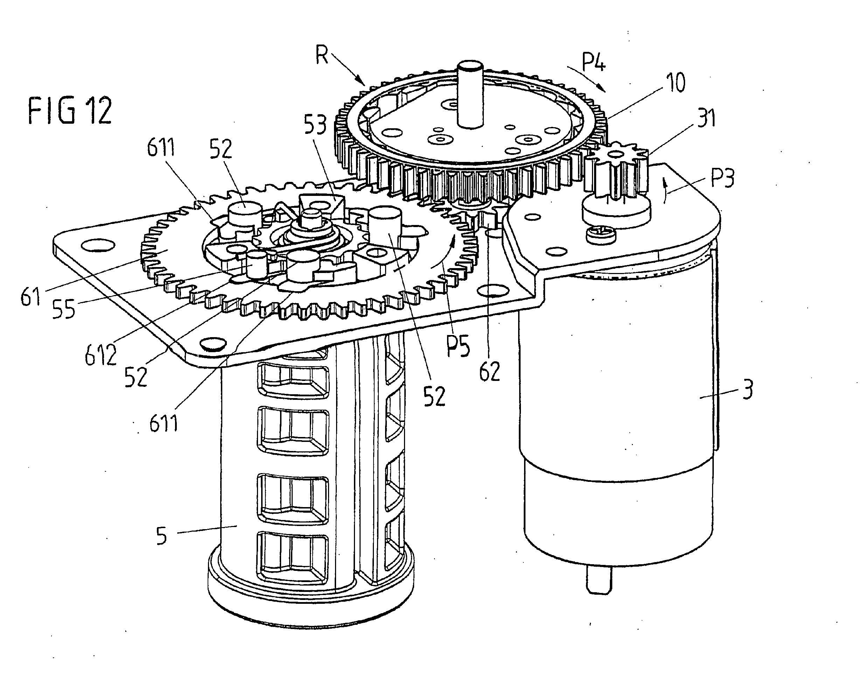

Das Motorritzel 31 dreht sich somit gemäß der Drehrichtung P3 gemäß Figur 12. Aufgrund dieser Drehung des Motorritzels 31 wird das Verbindungszahnrad 10 entlang der Drehrichtung P4 gedreht. Somit treibt das Kuppelrad 62 den Spindelkupplungszahnkranz 61 in der Drehrichtung P5 an. Aufgrund der Drehung des Spindelkupplungszahnkranzes 61 wird die Synchronisationsklinke 55 in die Klinkenverzahnung 54 der Gurtspindel 5 einsteuern und eine definierte Lage zwischen dem Spindelkupplungszahnkranz 61 und der Klinkenverzahnung 54 der Gurtspindel 5 herbeiführen. Nachfolgend werden dann die drei Spindelkupplungsklinken 52 in die Klinkenverzahnung 54 der Gurtspindel 5 einsteuern, so dass die Spindelkupplung 51 von der zunächst ausgekuppelten Position in die Einkuppelposition überführt wird.

Die Funktionsweise der drei Spindelkupplungsklinken 52 besteht also darin, bei Drehung des Motorritzels 31 eine Drehverbindung zwischen dem Antriebsmotor 3 und der Gurtspindel 5 herbeizuführen. Vor dem Aktivieren des Antriebsmotors 3 ist die Spindelkupplung 51 noch im ungekuppelten Zustand, so dass sich die Gurtspindel 5 völlig frei vom Automatikgetriebe 4 drehen kann. Das Automatikgetriebe 4 und der Antriebsmotor 3 sind also vor Eintreten eines Unfalls bzw. einer Gefahrensituation voneinander getrennt, so dass der Sicherheitsgurt 2 ohne große Kraft und damit sehr bequem von der Gurtspindel 5 abgerollt werden kann. Erst im Falle eines Unfalls bzw. einer Gefahrensituation wird durch Einschalten des Antriebsmotors 3 die Spindelkupplung 51 aktiviert.

Nach dem Einschalten des Antriebsmotors 3 erfolgt die Kraftübertragung somit zunächst über das Motorritzel 31, das Verbindungszahnrad 10, den Spindelkupplungszahnkranz 61 sowie die Spindelkupplung 51 zur Gurtspindel 5; es ist also der erste Kraftübertragungspfad 6 gemäß Figur 1 aktiviert. Die Übersetzung des ersten Kraftübertragungspfades bzw. des "ersten Ganges" des Automatikgetriebes 4 beträgt beispielsweise 26:1. Dies bedeutet, dass sich die Gurtspindel 5 bei 26 Umdrehungen des Antriebsmotors 3 um eine einzige Umdrehung dreht.

Sobald der Antriebsmotor 3 aktiviert ist und sich der Spindelkupplungszahnkranz 61 gemäß der Drehrichtung P5 gemäß Figur 12 dreht, wird der Sicherheitsgurt 2 auf der Gurtspindel 5 aufgerollt, so dass es zu einer Gurtstraffung kommt. Mit zunehmender Gurtstraffung wird die auf das Automatikgetriebe 4 und damit die Rutschkupplung R wirkenden Kraft immer größer. Sobald die Straffkraft im Schulterbereich des Fahrzeuginsassen eine Kraft von z.B. 200 bis 250 Newton erreicht hat, wird die im Zusammenhang mit der Figur 2 erläuterte Rutschkupplung R auskuppeln. Die Rutschkupplung R ist in der Figur 12 nur von der Unterseite zu sehen.

Das Planetengetriebe 71 gemäß Figur 1 wird, solange der "erste" Gang aktiv ist, durch das Verbindungszahnrad 10 mitgedreht und läuft zunächst kraftübertragungsfrei mit. Das kraftübertragungsfreie Mitlaufen des Planetenradgetriebes 71 ist dabei möglich, da sich das Hohlrad 713 des Planetengetriebes 71 entgegen der Pfeilrichtung P2 gemäß Figur 7 frei mitdrehen kann.

Sobald nun die Rutschkupplung R gemäß Figur 2 ausgekuppelt ist, wird der Spindelkupplungszahnkranz 61 durch das Kuppelrad 62 nicht mehr angetrieben. Dies führt dazu, dass sich das Hohlrad 713 nun entlang der Drehrichtung P2 gemäß Figur 7 drehen wird, was jedoch durch die Planetenkupplungsklinke 715 verhindert wird. Aufgrund der Sperrung des Hohlrades 713 kommt es nun zu einer Kraftübertragung durch das Planetengetriebe 71, so dass die Gurtspindel 5 nunmehr durch den zweiten Kraftübertragungspfad 7 angetrieben wird. Im zweiten Kraftübertragungspfad 7 - also im "zweiten Gang" des Automatikgetriebes 4 - beträgt das Übersetzungsverhältnis z.B. 127:1. Das Planetengetriebe 71 vervielfacht also das Übersetzungsverhältnis gegenüber dem ersten Gang des Automatikgetriebes 4 um den Faktor 4,8.

Aufgrund des Umschaltens des Automatikgetriebes 4 in den zweiten Gang wird die Straffkraft des Gurtstraffers 1 heraufgesetzt, so dass der Sicherheitsgurt 2 mit großer Straffkraft gestrafft wird. Sobald eine vorgegebene Straffkraft erreicht ist und der Straffvorgang abgeschlossen wird, wird der Antriebsmotor 3 abgeschaltet, um eine weitere Belastung des Bordnetzes bzw. der Fahrzeugbatterie durch den Antriebsmotor 3 zu verhindern. Um nun zu vermeiden, dass sich der Sicherheitsgurt 2 wieder von der Gurtspindel 5 abrollen kann, muss das Verbindungszahnrad 10 in der Straffposition gesperrt werden. Dies geschieht durch die Sperreinrichtung 8 und die Rastklinke 81, die sich zunächst in der in den Figuren 8 und 9 dargestellten ersten Klinkenposition befindet. In der ersten Klinkenposition kann sich das Verbindungszahnrad 10 in Gurtstraffrichtung drehen, wohingegen ein Abrollen des Sicherheitsgurtes 2 von der Gurtspindel 5 unterbunden wird. Die Rastklinke 81 führt also zu einem Festhalten der Straffkraft des Sicherheitsgurtes 2.

Wird nun im Falle eines Unfalls der Fahrzeuginsasse gegen den Sicherheitsgurt 2 gepresst, so wird die durch den Sicherheitsgurt 2 ausgeübte Rückhaltekraft stark ansteigen. Um nun ein Nachgeben des Sicherheitsgurtes 2 und ein Begrenzen der Rückhaltekraft zu bewirken, muss die Sperreinrichtung 8 gemäß Figur 1 bei einem Überschreiten einer vorgegebenen maximalen Gurtauszugskraft abgeschaltet werden. Dies geschieht bei dem Gurtstraffer 1 dadurch, dass die Rastklinke 81 von der in der Figur 9 dargestellten ersten Klinkenposition in die in der Figur 10 dargestellten zweiten Klinkenposition geschwenkt wird. Das Schwenken der Rastklinke 81 ist aufgrund des Langloches 83 möglich. Aufgrund des Umklappens bzw. Umschwenkens der Rastklinke 81 in die zweite Klinkenposition ist nachfolgend ein Abrollen des Sicherheitsgurtes 2 von der Gurtspindel 5 möglich. Das weitere Abrollen des Sicherheitsgurtes 2 von der Gurtspindel 5 wird durch weitere Sicherheitseinrichtungen, beispielsweise einem Torsionsstab, der im Inneren der Gurtspindel 5 angeordnet ist, gewährleistet.

Der Gurtstraffer 1 gemäß der Figur 1 ist vollständig reversibel ausgeführt; dies bedeutet, dass er nach einer ersten Inbetriebnahme in seinen Ausgangszustand zurückversetzt werden kann. Dies soll nun nachfolgend im Detail erläutert werden:

Unterschieden werden nachfolgend zwei unterschiedliche Unfallszenarien:

### a) "Vorgegebene Gurtauszugskraft wurde überschritten":

Bei diesem Unfallszenario wird nach erfolgter Gurtstraffung die vorgegebene Gurtauszugskraft überschritten, so dass die Rastklinke 81 in ihre zweite Klinkenposition überführt wird, wie dies im Zusammenhang mit den beiden Figuren 8 und 9 oben erläutert wurde. Die sich ergebende Ausgangsstellung der Rastklinke 81 sowie der Steuerscheibe 63 und der Rutschkupplungsklinke 65 zeigt nochmals die Figur 13.

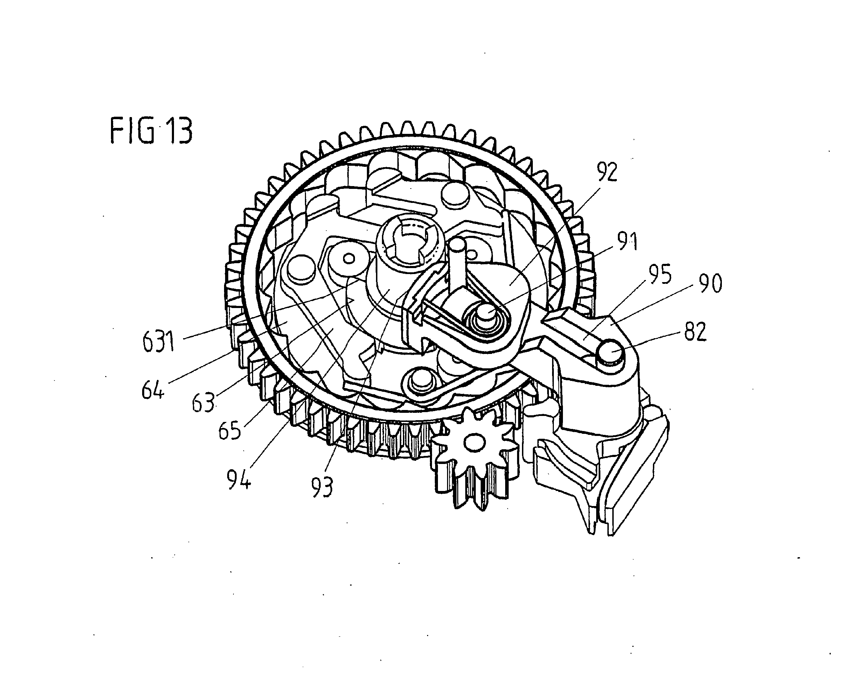

In der Figur 13 erkennt man außerdem einen Pleuel 90, der über einen Reibelementlagerstift 91 mit einem Reibelement 92 drehbar verbunden ist. An dem Reibelement 92 ist außenseitig eine Reibefläche 93 (z. B. Gummi) angeordnet, die an einen Schaft 94 der Steuerscheibe 63 anliegt. Der Pleuel 90 wird über ein Langloch 95 an dem Lagerstift 82 geführt. Die Position der Reibefläche 93 relativ zum Schaft 94 ergibt sich aufgrund des oben erläuterten Umklappens der Rastklinke 81 von der ersten Klinkenposition in die zweite Klinkenposition.

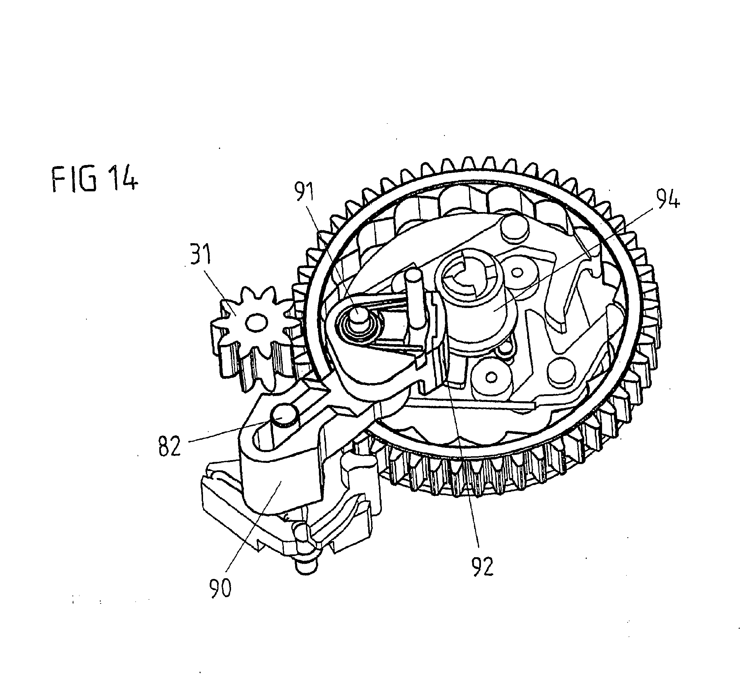

Da sich bei einer Drehung des Motorritzels 31 - wegen des Planetengetriebes - gleichzeitig auch das Kuppelrad 62, der Klinkenträger 64 und die Steuerscheibe 63 mit dem Schaft 94 passiv mitdrehen, wird die Reibefläche 93 und damit das Reibelement 92 weggeschwenkt und das Pleuel 90 in dem Langloch 95 verschoben (vgl. Figur 13). Wird nun der Antriebsmotor erneut in Straffrichtung betrieben, so wird die Rastklinke 81 zurück in ihre erste Klinkenposition zurückgeschwenkt (Figur 14). Dadurch wird der Schaft 94 und damit die Steuerscheibe 63 gegenüber dem Klinkenträger 64 entgegen der Federkraft der Drehfeder 642 verdreht, so dass der Nocken 631 in die in Figur 2 dargestellte Stellung zurückgedreht wird. Damit wird die Rutschkupplungsklinke 65 wieder für einen Eingriff mit dem Verbindungszahnrad 10 freigegeben.

Bei einem weiteren Betrieb des Antriebsmotors 3 in Gurtstraffrichtung wird dann die Rutschkupplungsklinke 65 in das Verbindungszahnrad 10 einsteuern, so dass der "erste" Gang des Automatikgetriebes 4 aktiviert wird. Da die Rastklinke 81 durch den Antriebsmotor 3 von ihrer zweiten Klinkenposition wieder in ihre erste Klinkenposition "umgeklappt" bzw. umgeschaltet wurde, ist ein Sperren des Gurtes 2 nach erfolgter Gurtstraffung möglich.

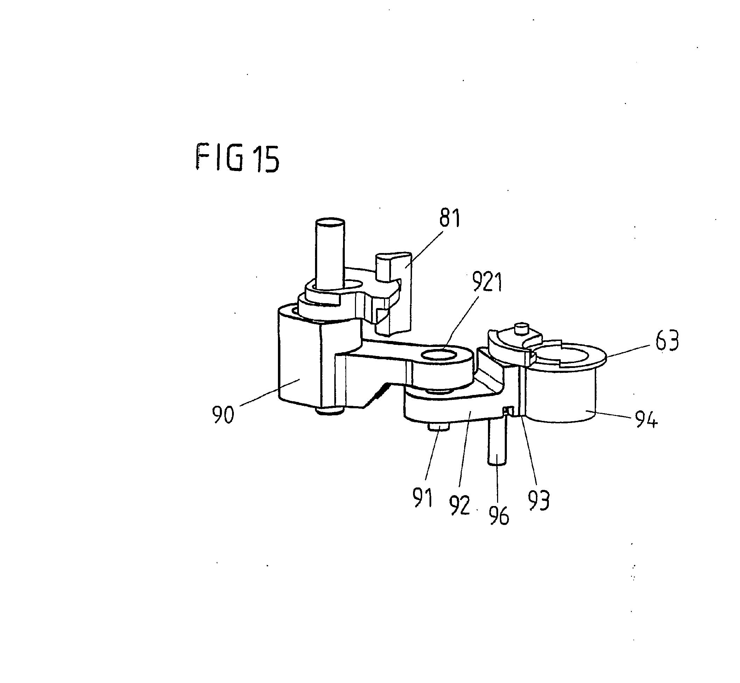

Figur 15 zeigt zum besseren Verständnis der Funktionsweise den Pleuel 90, einen Pleuelstift 921, das Reibelement 92 sowie die Rastklinke 81 im Detail. Man erkennt außerdem einen Anschlagstift 96, der fest an der Montageplatte 9 angebracht ist. Der Anschlagstift 96 wird in einer Kulisse des Reibelements 92 geführt und schlägt in Endpositionen des Reibelements 92 an beispielsweise gefederten Anschlägen des Reibelements 92 an.

### b) "Vorgegebene Gurtauszugskraft wurde nicht überschritten":

Falls die vorgegebene Gurtauszugskraft nicht überschritten wird, wird folglich die Rastklinke 81 nicht in die zweite Klinkenposition umgeklappt. Die Rastklinke 81 ist also in ihrer ersten Rastposition verblieben, so dass die Position der Rastklinke 81 und die Position des Pleuels 90 sowie des Reibelements 92 der in der Figur 14 gezeigten Position entspricht.

Um nun die Rastklinke 81 in die nicht sperrende zweite Klinkenposition zu bewegen und den Gurt zu entspannen, wird der Antriebsmotor 3 zunächst in Gurtabrollrichtung betrieben, so dass die Rastklinke 81 sowie der Pleuel 90 und das Reibelement 92 in die Positionen gemäß Figur 13 überführt werden. Damit ist der Gurtstraffer wieder aktivierbar.

Zum erneuten Gurtstraffen wird der Antriebsmotor 3 in Gurtstraffdrehrichtung betrieben, so dass der Bewegungsablauf gemäß obigen Abschnitt a) ("Vorgegebene Gurtauszugskraft wurde überschritten") durchlaufen wird. Dadurch wird das Automatikgetriebe 4 wieder in den "ersten Gang" geschaltet, so dass der erste Kraftübertragungspfad 6 aktiv ist. Der Gurtstraffer ist somit für weitere Gurtstraffungen einsatzbereit.

Bei einem Betrieb des Antriebsmotors 3 in Gurtabrollrichtung wird aufgrund der entsprechenden Rotation des Verbindungszahnrades 10 im Übrigen ebenfalls der Spindelkupplungszahnkranz 61 gedreht, so dass die im Zusammenhang mit der Figur 5 im Detail erläuterten Spindelkupplungsklinken 52 bei Lastfreiheit aus der Klinkenverzahnung 54 der Gurtspindel 5 herausgedreht werden. Entsprechendes gilt für die Synchronisationsklinke 55, die ebenfalls aus der Klinkenverzahnung 54 der Gurtspindel 5 herausgedreht wird. Durch das Herausdrehen der drei Spindelkupplungsklinken 52 sowie der Synchronisationsklinke 55 wird die Spindelkupplung 51 ausgekuppelt, so dass sich die Gurtspindel 5 frei drehen kann; die Gurtspindel 5 wird also sowohl von dem Planetengetriebe 71 und damit von dem zweiten Kraftübertragungspfad 7 als auch von dem ersten Kraftübertragungspfad 6 getrennt. Zu einem Wiedereinkuppeln der Synchronisationsklinke 55 sowie nachfolgend der Spindelkupplungsklinken 52 kommt es erst, wenn der Antriebsmotor wieder in Gurtstraffdrehrichtung dreht und der Spindelkupplungszahnkranz 61 in der in Figur 5 mit dem Bezugszeichen S dargestellten Richtung angetrieben wird.

Falls es nach einer erfolgten Gurtstraffung und Aktivierung der Sperreinrichtung 8 wider Erwarten zu keinem Unfall kommt, weil die Gefahrensituation abgewendet werden konnte, so muss der Sicherheitsgurt 2 wieder gelockert werden können. Dies geschieht bei dem Gurtstraffer 1 - wie bereits im Zusammenhang mit dem Wiedereinkuppeln der Rutschkupplung R oben erläutert wurde- ebenfalls dadurch, dass der Antriebsmotor kurzzeitig in Gurtabrollrichtung betrieben wird. Durch Antreiben des Verbindungszahnrades 10 wird die Rastklinke 81 von ihrer ersten (sperrenden) Klinkenposition in ihre zweite Klinkenposition "umgeklappt" bzw. umgeschaltet, so dass der Gurt abrollen kann. Die Abrollgeschwindigkeit des Gurtes kann beispielsweise mit dem Antriebsmotor 3 kontrolliert werden, da dessen Motorritzel 31 stets mit dem Verbindungszahnrad 10 in Eingriff steht. Somit kann durch Bestromen des Antriebsmotors 3 in Gurtstraffdrehrichtung das Abrollen des Gurtes gebremst werden.

Wie bereits erwähnt, wird bei einem Betrieb des Antriebsmotors 3 in Gurtabrollrichtung bei Lastfreiheit die Spindelkupplung 51 deaktiviert, so dass der Gurt vom Automatikgetriebe 4 getrennt wird. Im Rahmen des Umklappens der Rastklinke 81 von der ersten Klinkenposition in die zweite Klinkenposition wird die Gurtkraft im Übrigen nicht erhöht, so dass das Auftreten des sonst üblichen "Release Peak" vermieden wird; das Abschalten der Gurststraffung ist also für den Fahrzeuginsassen mit keiner weiteren Erhöhung der Gurtrückhaltekraft verbunden.

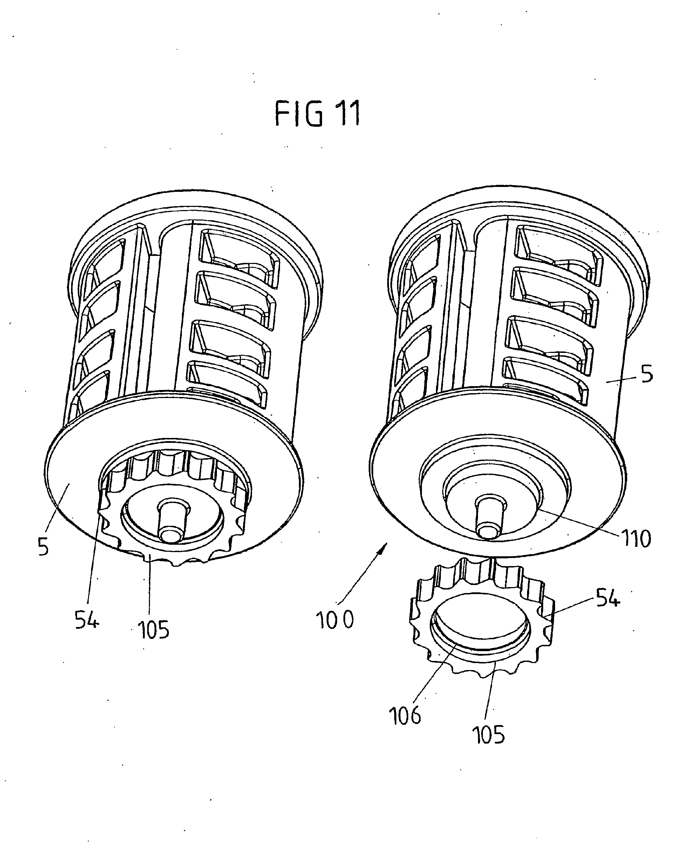

Zwischen der Klinkenverzahnung 54 der Gurtspindel 5 und der Gurtspindel 5 kann im Übrigen eine Überlastkupplung angeordnet sein; ein Ausführungsbeispiel für eine solche Überlastkupplung zeigt Figur 11. Die Überlastkupplung 100 gemäß der Figur 11 verbindet die Gurtspindel 5 sowie das Automatikgetriebe 4 miteinander. Die Überlastkupplung 100 weist einen Überlastkupplungsring 105 auf, dessen Außenverzahnung die Klinkenverzahnung 54 der Gurtspindel 5 und dessen Innenfläche einen Innenkonus 106 bildet. Darüber hinaus weist die Überlastkupplung 100 einen Außenkonus 110 auf, der mit der Gurtspindel 5 beispielsweise einstückig verbunden ist.

Die Funktionsweise des Innenkonus 106 und des Außenkonus 110 besteht darin, das Automatikgetriebe 4 gemäß Figur 1 zu schützen. Sobald die Gurtspindel 5 an die Überlastkupplung 100 ein Drehmoment anlegt, das ein vorgegebenes maximales Drehmoment überschreitet, wird die Überlastkupplung 100 die Drehverbindung zwischen der Gurtspindel 5 und dem Automatikgetriebe 4 durch Schlupf unterbrechen.

Das Unterbrechen der Kuppelverbindung basiert auf dem Auflösen der kraftschlüssigen Verbindung zwischen dem Außenkonus 110 und dem Innenkonus 106; denn bei einem Überschreiten des vorgegebenen maximalen Drehmoments wird der Außenkonus 110 in dem Innenkonus 106 "durchrutschen".

Das maximale Drehmoment ist vorzugsweise derart bemessen, dass es zu keinem Umklappen der Rastklinke 81 von der ersten Klinkenposition in die zweite Klinkenposition kommt. Die Rastklinke verbleibt daher nach einer Gurtstraffung in der ersten Klinkenposition und wird erst durch den Antriebsmotor 3 bei Betrieb in Gurtabrollrichtung in die zweite Klinkenposition gebracht, wobei anschließend die Spindelkupplung 51 ausgekoppelt wird.

Zusätzlich zu der Rutschkupplungsklinke 65 kann im Übrigen eine zweite Rutschkupplungsklinke 69 vorhanden sein. Die Funktion der zweiten Rutschkupplungsklinke 69 besteht darin, die erste Rutschkupplungsklinke 65 bei der Kraftübertragung zu unterstützen. Die zweite Rutschkupplungsklinke 69 ist derart angeordnet, dass sie gemeinsam mit der ersten Rutschkupplungsklinke 65 ein- und ausgekoppelt wird.

### Bezugszeichenliste

- 1: Gurtstraffer
- 2: Sicherheitsgurt
- 3: Antriebsmotor
- 4: Automatikgetriebe
- 5: Gurtspindel
- 6: Erster Kraftübertragungspfad
- 7: Zweiter Kraftübertragungspfad
- 8: Sperreinrichtung
- 9: Montageplatte
- 10: Verbindungszahnrad
- 31: Motorritzel
- 51: Spindelkupplung
- 52: Spindelkupplungsklinken
- 53: Spindelkupplungsgehäuse
- 54: Verzahnung
- 55: Synchronisationsklinke
- 61: Spindelkupplungszahnkranz
- 62: Kuppelrad
- 63: Steuerscheibe
- 64: Klinkenträger
- 65: Erste Rutschkupplungsklinke
- 69: Zweite Rutschkupplungsklinke
- 71: Planetengetriebe
- 81: Rastklinke
- 82: Lagerstift
- 83: Langloch
- 84: Rastklinkenfeder
- 85: Rastblock
- 86: Nocken
- 87: Anschlag
- 90: Pleuel
- 91: Reibelementlagerstift
- 92: Reibelement
- 93: Reibefläche
- 94: Schaft
- 95: Langloch
- 96: Anschlagstift
- 100: Überlastkupplung
- 105: Überlastkupplungsring
- 106: Innenkonus
- 110: Außenkonus
- 521: Innere Klauen
- 522: Äußere Nocken
- 531: Bohrungen
- 532: Bremsschuh
- 533: Bremsschuhfeder
- 611: innenrandseitige Ausnehmung
- 612: Synchronisationsausnehmung
- 631: Nocken
- 641: Schwenkfeder
- 642: Drehfeder
- 651: Schwenkachse
- 711: Äußeres Sonnenrad
- 712: Inneres Sonnenrad
- 713: Hohlrad
- 714: Planetenrad
- 715: Planetenkupplungsklinke
- 716: Planetenkupplungsklinkenfeder
- 831: Anschlag des Langlochs 83
- 921: Pleuelstift

## Patentansprüche

1. Gurtstraffer (1) für ein Sicherheitsgurtsystem mit einem Antriebsmotor (3) und einem mit dem Antriebsmotor (3) und einer Gurtspindel (5) des Sicherheitsgurtssystems in Verbindung stehenden Getriebe, **dadurch gekennzeichnet, dass** zwischen dem Getriebe (4) und der Gurtspindel (5) eine Überlastkupplung (100) angeordnet ist, die Drehmomente bis zu einem vorgegebenen maximalen Drehmoment überträgt und bei Überschreiten des maximalen Drehmoments auskuppelt.

2. Gurtstraffer nach Anspruch 1, **dadurch gekennzeichnet, dass** die Überlastkupplung (100) zwei Koppelemente (105, 110) aufweist, die im Einkuppelzustand der Überlastkupplung eine kraftschlüssige Verbindung zwischen dem Getriebe (4) und der Gurtspindel (5) bilden und im Auskuppelzustand der Überlastkupplung (100) einen Schlupf aufweisen.

3. Gurtstraffer nach einem der Ansprüche 1 oder 2, **dadurch gekennzeichnet, dass** das erste Koppelelement durch einen Innenkonus (106) und das zweite Koppelelement durch einen im Innenkonus (106) kraftschlüssig gehaltenen Außenkonus (110) gebildet ist.

4. Gurtstraffer nach einem der voranstehenden Ansprüche, **dadurch gekennzeichnet, dass** der Gurtstraffer (1) vollständig reversibel ist.

5. Gurtstraffer nach einem der voranstehenden Ansprüche, **dadurch gekennzeichnet, dass** das Getriebe ein mechanisches Automatikgetriebe (4) ist, das lastabhängig selbsttätig schaltet.

6. Gurtstraffer nach Anspruch 5, **dadurch gekennzeichnet, dass** das Automatikgetriebe (4) einen ersten Kraftübertragungspfad (6) für einen ersten Gang mit einer ersten Übersetzung und zumindest einen weiteren Kraftübertragungspfad (7) für einen zweiten Gang mit einer gegenüber der ersten Übersetzung größeren Übersetzung aufweist.

7. Gurtstraffer nach Anspruch 6, **dadurch gekennzeichnet, dass** das Automatikgetriebe ein (4) von dem Antriebsmotor (3) des Gurtstraffers angetriebenes Verbindungszahnrad (10) aufweist, das sowohl mit dem ersten als auch mit dem zweiten Kraftübertragungspfad (6, 7) zusammenwirkt.

8. Gurtstraffer nach einem der voranstehenden Ansprüche 6 oder 7, **dadurch gekennzeichnet, dass** der erste Kraftübertragungspfad (6) eine Rutschkupplung (R) umfasst, die bei Überschreiten eines vorgegebenen Abschaltmoments auskuppelt, und dass infolgedessen der weitere Kraftübertragungspfad (7) aktiviert wird.

9. Gurtstraffer nach Anspruch 8, **dadurch gekennzeichnet, dass** das vorgegebene Abschaltmoment der Rutschkupplung (R) derart bemessen ist, dass dieses einer Gurtkraft an der Schulter des Fahrzeuginsassen zwischen 200 und 250 Newton entspricht.

10. Gurtstraffer nach einem der voranstehenden Ansprüche 6 bis 9, **dadurch gekennzeichnet, dass** der erste Kraftübertragungspfad (6) die Rutschkupplung (R), ein mit der Rutschkupplung in Verbindung stehendes Kuppelrad (62) und ein mit der Gurtspindel (5) und dem Kuppelrad (62) in Verbindung stehenden Spindelkupplungszahnkranz (61) aufweist.

11. Gurtstraffer nach einem der voranstehenden Ansprüche 8 bis 10, **dadurch gekennzeichnet, dass**
- die Rutschkupplung (R) einen Klinkenträger (64) aufweist, der koaxial mit dem Verbindungszahnrad (10) drehbar gelagert ist, und
- auf dem Klinkenträger (64) eine Rutschkupplungsklinke (65) derart schwenkbar gelagert ist, dass diese in eine Kuppelstellung und in eine Auskuppelstellung schwenkbar ist.

12. Gurtstraffer nach Anspruch 11, **dadurch gekennzeichnet, dass** die Rutschkupplungsklinke (65) in ihrer Kuppelstellung den Klinkenträger (64) und das Verbindungszahnrad (10) in Gurtstraffdrehrichtung (S) koppelt und in ihrer Auskuppelstellung bezüglich der Kupplung zwischen dem Verbindungszahnrad (10) und dem Klinkenträger (64) wirkungslos ist.

13. Gurtstraffer nach einem der voranstehenden Ansprüche 11 oder 12, **dadurch gekennzeichnet, dass** die Rutschkupplung (R) eine Steuerscheibe (63) aufweist, die verhindert, dass die Rutschkupplungsklinke (65) nach Erreichen ihrer Auskuppelstellung selbsttätig erneut in die Kuppelstellung gelangt.

14. Gurtstraffer nach Anspruch 13, **dadurch gekennzeichnet, dass** die Steuerscheibe (63) und der Klinkenträger (64) um einen vorgegebenen Drehwinkel relativ zueinander verdrehbar sind.

15. Gurtstraffer nach Anspruch 14, **dadurch gekennzeichnet, dass** - sobald die Rutschkupplungsklinke (65) ihre Auskuppelstellung erreicht - die Steuerscheibe (63) durch eine Feder (642) in eine Blockadestellung gedreht wird, in der sie die Rutschkupplungsklinke (65) in der Auskuppelstellung hält.

16. Gurtstraffer nach einem der voranstehenden Ansprüche 8 bis 15, **dadurch gekennzeichnet, dass** die Rutschkupplung (R) zusätzlich zu der ersten Rutschkupplungsklinke (65) eine zweite Rutschkupplungsklinke (69) aufweist, die die erste Rutschkupplungsklinke (65) unterstützt.

17. Gurtstraffer nach Anspruch 16, **dadurch gekennzeichnet, dass** die zweite Rutschkupplungsklinke (69) auf dem Klinkenträger (64) schwenkbar gelagert ist.

18. Gurtstraffer nach einem der voranstehenden Ansprüche 16 oder 17, **dadurch gekennzeichnet, dass** die erste und die zweite Rutschkupplungsklinke (65, 69) mit derselben Schwenkfeder (641) bezüglich des Verbindungszahnrades (10) in Einsteuerrichtung vorgespannt sind.

19. Gurtstraffer nach einem der voranstehenden Ansprüche 14 bis 18, **dadurch gekennzeichnet, dass** die Steuerscheibe (63) derart ausgestaltet ist, dass diese bei Drehen des Automatikgetriebes (4) zunächst in Gurtabrollrichtung (A) und nachfolgend in Gurtstraffdrehrichtung aus der Blockadestellung herausgedreht wird, wodurch die erste Rutschkupplungsklinke (65) zurück in ihre Kuppelstellung geführt wird.

20. Gurtstraffer nach einem der voranstehenden Ansprüche, **dadurch gekennzeichnet, dass** die Gurtspindel (5) und das Automatikgetriebe (4) mittels einer Spindelkupplung (51) verbunden sind.

21. Gurtstraffer nach Anspruch 20, **dadurch gekennzeichnet, dass** die Spindelkupplung (51) bei Drehung des Antriebsmotors (3) in Gurtstraffdrehrichtung einkuppelt und bei Drehung des Antriebsmotors (3) in Gurtabrolldrehrichtung auskuppelt.

22. Gurtstraffer nach einem der voranstehenden Ansprüche 20 oder 21, **dadurch gekennzeichnet, dass** die Spindelkupplung (51) Spindelkupplungsklinken (52) aufweist.

23. Gurtstraffer nach Anspruch 22, **dadurch gekennzeichnet, dass**
- die Spindelkupplungsklinken (52) derart angeordnet sind, dass sie in eine Klinkenverzahnung (54) der Gurtspindel (5) einsteuern, sobald der Spindelkupplungszahnkranz (61) in Gurtstraffdrehrichtung dreht, wodurch die Gurtspindel (5) und der Spindelkupplungszahnkranz (61) drehfest miteinander koppeln,
und/oder
- das die Spindelkupplungsklinken (52) derart angeordnet sind, dass sie aus der Klinkenverzahnung (54) der Gurtspindel (5) herausgeschwenkt werden, wenn der Spindelkupplungszahnkranz (61) in Gurtabrollrichtung dreht, wodurch die Verbindung zwischen der Gurtspindel (5) und dem Spindelkupplu ngszahnkranz (61) getrennt wird.

24. Gurtstraffer nach einem der voranstehenden Ansprüche 20 bis 23, **dadurch gekennzeichnet, dass** die Spindelkupplung (51) eine Synchronisationsklinke (55) aufweist, die in die Klinkenverzahnung (54) der Gurtspindel (5) eingreift, wodurch die Gurtspindel (5) und der Spindelkupplungszahnkranz (61) zueinander ausgerichtet werden, bevor die Spindelkupplungsklinken (52) der Spindelkupplung (51) in die Klinkenverzahnung (54) der Gurtspindel (5) eingreifen.

25. Gurtstraffer nach Anspruch 24, **dadurch gekennzeichnet, dass** die Spindelkupplungsklinken (52) und die Synchronisationsklinke (55) in einem Spindelkupplungsgehäuse (53) schwenkbar gehalten sind.

26. Gurtstraffer nach Anspruch 25, **dadurch gekennzeichnet, dass** das Spindelkupplungsgehäuse (53) zumindest eine Befestigungsstelle (531) zur drehbaren Befestigung mindestens eines Planetenrades (714) eines Planetengetriebes (71) aufweist.

27. Gurtstraffer nach Anspruch 26, **dadurch gekennzeichnet, dass** die Befestigungsstellen (531) durch Stifte gebildet sind, auf denen die Planetenräder (714) des Planetengetriebes (71) drehbar gelagert sind.

28. Gurtstraffer nach einem der voranstehenden Ansprüche, **dadurch gekennzeichnet, dass** das Automatikgetriebe (4) ein Planetengetriebe (71) aufweist.

29. Gurtstraffer nach Anspruch 28, **dadurch gekennzeichnet, dass** das Planetengetriebe (71) im weiteren Kraftübertragungspfad (7) angeordnet ist.

30. Gurtstraffer nach Anspruch 29, **dadurch gekennzeichnet, dass** das Planetengetriebe (71) bei eingekuppelter Rutschkupplung (R) kraftübertragungsfrei mitläuft und bei ausgekuppelter Rutschkupplung (R) zur Kraftübertragung herangezogen wird und den zweiten Gang des Automatikgetriebes (4) bereitstellt.

31. Gurtstraffer nach einem der voranstehenden Ansprüche 28 bis 30, **dadurch gekennzeichnet, dass** das Planetengetriebe (71) ein Hohlrad (713) aufweist, das mit zumindest einem von einem inneren Sonnenrad (712) angetriebenen Planetenrad (714) in Verbindung steht.

32. Gurtstraffer nach Anspruch 31, **dadurch gekennzeichnet, dass** das Planetengetriebe (71) ein äußeres Sonnenrad (711) aufweist, das von dem Verbindungszahnrad (10) angetrieben wird und das drehfest mit dem inneren Sonnenrad (712) verbunden ist.

33. Gurtstraffer nach einem der voranstehenden Ansprüche 31 oder 32, **dadurch gekennzeichnet, dass** das Planetengetriebe (71) eine Planetenkupplungsklinke (715) aufweist, die mit dem Hohlrad (713) zusammenwirkt und ein Drehen des Hohlrades (713) entlang einer vorgegebenen Hohlrad-Drehrichtung erlaubt und ein Drehen des Hohlrades entgegen der vorgegebenen Hohlrad-Drehrichtung sperrt.

34. Gurtstraffer nach Anspruch 33, **dadurch gekennzeichnet, dass** die Planetenkupplungsklinke (715) durch eine Planetenkupplungsklinkenfeder (716) gegen das Hohlrad (713) geschwenkt wird.

35. Gurtstraffer nach einem der voranstehenden Ansprüche, **dadurch gekennzeichnet, dass** der Gurtstraffer eine Sperreinrichtung (8) aufweist, die nach Abschluss des Straffvorgangs die Gurtspindel (5) in der gestrafften Lage arretiert.

36. Gurtstraffer nach Anspruch 35, **dadurch gekennzeichnet, dass** die Sperreinrichtung (8) derart ausgestaltet ist, dass sie ohne Erhöhung der auf den Fahrzeuginsassen einwirkenden Gurtrückhaltekraft lösbar ist.

37. Gurtstraffer nach einem der voranstehenden Ansprüche 35 oder 36, **dadurch gekennzeichnet, dass** die Sperreinrichtung (8) mit dem Antriebsmotor (3) des Gurtstraffers (1) lösbar ist.

38. Gurtstraffer nach einem der voranstehenden Ansprüche 35 bis 37, **dadurch gekennzeichnet, dass** die Sperreinrichtung (8) mit dem Antriebsmotor (3) des Gurtstraffers (1) gelöst wird, indem der Antriebsmotor (3) in Gurtabrollrichtung betrieben wird.

39. Gurtstraffer nach einem der voranstehenden Ansprüche 35 bis 38, **dadurch gekennzeichnet, dass** die Sperreinrichtung (8) eine Rastklinke (81) aufweist, die in eine erste und in eine zweite Klinkenposition gebracht werden kann, wobei die erste Klinkenposition die Gurtspindel (5) in Gurtabrollrichtung blockiert und wobei die zweite Klinkenposition die Gurtspindel (5) in Gurtabrollrichtung freigibt.

40. Gurtstraffer nach einem der voranstehenden Ansprüche 35 bis 39, **dadurch gekennzeichnet, dass** die Rastklinke (81) schwenkbar und federnd gehalten ist.

41. Gurtstraffer nach Anspruch 40, **dadurch gekennzeichnet, dass** die Rastklinke (81) derart gehalten ist, dass sie bei Vorliegen einer vorgegebenen, an der Schulter des Fahrzeuginsassen anliegenden Gurtauszugskraft, die vorzugsweise zwischen 1000 N und 3000 N liegt, von der ersten Klinkenposition in die zweite Klinkenposition geschwenkt wird.

42. Gurtstraffer nach einem der voranstehenden Ansprüche 40 oder 41, **dadurch gekennzeichnet, dass** die Rastklinke (81) schwenkbar und federnd derart gehalten ist, dass sie mit Hilfe der Antriebskraft des Antriebsmotors (3) von der zweiten Klinkenposition in die erste Klinkenposition zurückgeschwenkt werden kann.

43. Gurtstraffer nach einem der voranstehenden Ansprüche 39 bis 42, **dadurch gekennzeichnet, dass** die Schwenkachse (82) der Rastklinke (81) in einem Langloch (83) der Rastklinke (81) derart angeordnet ist, dass die Rastklinke (81) in Drehrichtung um die Schwenkachse (82) schwenkbar und radial zur Schwenkachse (82) entlang der durch das Langloch (83) gebildeten Führungskulisse auslenkbar ist.

## Claims

1. A seat-belt tensioner (1) for a seat-belt system with a drive motor (3) and a gear which is connected to the drive motor (3) and to a seat-belt spindle (5) of the seat-belt system, **characterized in that** an overload clutch (100) is arranged between the gear (4) and the seat-belt spindle (5) and transmits torques up to a predetermined maximum torque and, when the maximum torque is exceeded, disengages.

2. The seat-belt tensioner as claimed in claim 1, **characterized in that** the overload clutch (100) has two coupling elements (105, 110) which, in the engaging state of the overload clutch, form a force-locked connection between the gear (4) and the seat-belt spindle (5) and, in the disengaging state of the overload clutch (100), have a slip.

3. The seat-belt tensioner as claimed in either of claims 1 and 2, **characterized in that** the first coupling element is formed by an internal taper (106) and the second coupling element is formed by an external taper (110) which is held in a force-locked manner in the internal taper (106).

4. The seat-belt tensioner as claimed in one of the preceding claims, **characterized in that** the seat-belt tensioner (1) is completely reversible.

5. The seat-belt tensioner as claimed in one of the preceding claims, **characterized in that** the gear is a mechanical automatic gear (4) which shifts automatically as a function of load.

6. The seat-belt tensioner as claimed in claim 5, **characterized in that** the automatic gear (4) has a first force transmission path (6) for a first speed with a first transmission ratio and at least one further force transmission path (7) for a second speed with a transmission ratio which is larger than the first transmission ratio.

7. The seat-belt tensioner as claimed in claim 6, **characterized in that** the automatic gear (4) has a connecting gearwheel (10) which is driven by the drive motor (3) of the seat-belt tensioner and interacts both with the first and with the second force transmission path (6, 7).

8. The seat-belt tensioner as claimed in either of the preceding claims 6 and 7, **characterized in that** the first force transmission path (6) comprises a sliding clutch (R) which disengages when a predetermined switching-off moment is exceeded, and **in that**, as a consequence, the further force transmission path (7) is activated.

9. The seat-belt tensioner as claimed in claim 8, **characterized in that** the predetermined switching-off moment of the sliding clutch (R) is dimensioned in such a manner that it corresponds to a seat-belt force on the shoulder of the vehicle occupant of between 200 and 250 newtons.

10. The seat-belt tensioner as claimed in one of the preceding claims 6 to 9, **characterized in that** the first force transmission path (6) has the sliding clutch (R), a coupling wheel (62) connected to the sliding clutch and a spindle clutch toothed ring (61) connected to the seat-belt spindle (5) and the coupling wheel (62).

11. The seat-belt tensioner as claimed in one of the preceding claims 8 to 10, **characterized in that**
- the sliding clutch (R) has a pawl carrier (64) which is mounted rotatably coaxially with the connecting gearwheel (10), and
- a sliding clutch pawl (65) is mounted pivotably on the pawl carrier (64) in such a manner that it can be pivoted into a coupling position and into a disengaging position.

12. The seat-belt tensioner as claimed in claim 11, **characterized in that**, in its coupling position, the sliding clutch pawl (65) couples the pawl carrier (64) and the connecting gearwheel (10) in the seat-belt-tensioning direction of rotation (S) and, in its disengaging position, it is ineffective with regard to the coupling between the connecting gearwheel (10) and the pawl carrier (64).

13. The seat-belt tensioner as claimed in either of the preceding claims 11 and 12, **characterized in that** the sliding clutch (R) has a disk cam (63) which prevents the sliding clutch pawl (65), after it has reached its disengaging position, from automatically passing again into the coupling position.

14. The seat-belt tensioner as claimed in claim 13, **characterized in that** the disk cam (63) and the pawl carrier (64) can be rotated by a predetermined angle of rotation relative to each other.

15. The seat-belt tensioner as claimed in claim 14, **characterized in that** - as soon as the sliding clutch pawl (65) reaches its disengaging position - the disk cam (63) is rotated by a spring (642) into a blockade position in which it holds the sliding clutch pawl (65) in the disengaging position.

16. The seat-belt tensioner as claimed in one of the preceding claims 8 to 15, **characterized in that**, in addition to the first sliding clutch pawl (65), the sliding clutch (R) has a second sliding clutch pawl (69) which assists the first sliding clutch pawl (65).

17. The seat-belt tensioner as claimed in claim 16, **characterized in that** the second sliding clutch pawl (69) is mounted pivotably on the pawl carrier (64).

18. The seat-belt tensioner as claimed in either of the preceding claims 16 and 17, **characterized in that** the first and the second sliding clutch pawl (65, 69) are preloaded in the insertion direction with respect to the connecting gearwheel (10) by the same pivoting spring (641).

19. The seat-belt tensioner as claimed in one of the preceding claims 14 to 18, **characterized in that** the disk cam (63) is configured in such a manner that, when the automatic gear (4) is rotated, said disk cam is first of all rotated in the seat-belt-unrolling direction (A) and is subsequently rotated out of the blockade position in the seat-belt-tensioning direction of rotation, as a result of which the first sliding clutch pawl (65) is guided back into its coupling position.

20. The seat-belt tensioner as claimed in one of the preceding claims, **characterized in that** the seat-belt spindle (5) and the automatic gear (4) are connected by means of a spindle clutch (51).

21. The seat-belt tensioner as claimed in claim 20, **characterized in that** the spindle clutch (51) engages when the drive motor (3) rotates in the seat-belt-tensioning direction of rotation and disengages when the drive motor (3) rotates in the seat-belt-unrolling direction of rotation.

22. The seat-belt tensioner as claimed in either of the preceding claims 20 and 21, **characterized in that** the spindle clutch (51) has spindle clutch pawls (52).

23. The seat-belt tensioner as claimed in claim 22,
**characterized in that**
- the spindle clutch pawls (52) are arranged in such a manner that they are inserted into pawl teeth (54) of the seat-belt spindle (5) as soon as the spindle clutch toothed ring (61) rotates in the seat-belt-tensioning direction of rotation, as a result of which the seat-belt spindle (5) and the spindle clutch toothed ring (61) are coupled to each other in a rotationally fixed manner, and/or
- **in that** the spindle clutch pawls (52) are arranged in such a manner that they are pivoted out of the pawl teeth (54) of the seat-belt spindle (5) when the spindle clutch toothed ring (61) rotates in the seat-belt-unrolling direction, as a result of which the connection between the seat-belt spindle (5) and the spindle clutch toothed ring (61) is separated.

24. The seat-belt tensioner as claimed in one of the preceding claims 20 to 23, **characterized in that** the spindle clutch (51) has a synchronization pawl (55) which engages in the pawl teeth (54) of the seat-belt spindle (5), as a result of which the seat-belt spindle (5) and the spindle clutch toothed ring (61) are aligned with each other before the spindle clutch pawls (52) of the spindle clutch (51) engage in the pawl teeth (54) of the seat-belt spindle (5).

25. The seat-belt tensioner as claimed in claim 24, **characterized in that** the spindle clutch pawls (52) and the synchronization pawl (55) are held pivotably in a spindle clutch housing (53).

26. The seat-belt tensioner as claimed in claim 25, **characterized in that** the spindle clutch housing (53) has at least one fastening point (531) for the rotatable fastening of at least one planet wheel (714) of a planetary gear (71).

27. The seat-belt tensioner as claimed in claim 26, **characterized in that** the fastening points (531) are formed by pins on which the planet wheels (714) of the planetary gear (71) are rotatably mounted.

28. The seat-belt tensioner as claimed in one of the preceding claims, **characterized in that** the automatic gear (4) has a planetary gear (71).

29. The seat-belt tensioner as claimed in claim 28, **characterized in that** the planetary gear (71) is arranged in the further force transmission path (7).

30. The seat-belt tensioner as claimed in claim 29, **characterized in that** the planetary gear (71) revolves in a manner free from force transmission when the sliding clutch (R) is engaged and, when the sliding clutch (R) is disengaged, is used for the force transmission and provides the second speed of the automatic gear (4).

31. The seat-belt tensioner as claimed in one of the preceding claims 28 to 30, **characterized in that** the planetary gear (71) has a crown wheel (713) which is connected to at least one planet wheel (714) driven by an internal sun wheel (712).

32. The seat-belt tensioner as claimed in claim 31, **characterized in that** the planetary gear (71) has an external sun wheel (711) which is driven by the connecting gearwheel (10) and which is connected in a rotationally fixed manner to the internal sun wheel (712).

33. The seat-belt tensioner as claimed in either of the preceding claims 31 and 32, **characterized in that** the planetary gear (71) has a planetary clutch pawl (715) which interacts with the crown wheel (713) and permits a rotation of the crown wheel (713) along a predetermined crown-wheel direction of rotation and blocks a rotation of the crown wheel counter to the predetermined crown-wheel direction of rotation.

34. The seat-belt tensioner as claimed in claim 33, **characterized in that** the planetary clutch pawl (715) is pivoted toward the crown wheel (713) by a planetary clutch pawl spring (716).

35. The seat-belt tensioner as claimed in one of the preceding claims, **characterized in that** the seat-belt tensioner has a blocking device (8) which blocks the seat-belt spindle (5) in the tensioned position after the end of the tensioning operation.

36. The seat-belt tensioner as claimed in claim 35, **characterized in that** the blocking device (8) is configured in such a manner that it can be released without increasing the seat-belt-restraining force acting on the vehicle occupant.

37. The seat-belt tensioner as claimed in either of the preceding claims 35 and 36, **characterized in that** the blocking device (8) can be released by the drive motor (3) of the seat-belt tensioner (1).

38. The seat-belt tensioner as claimed in one of the preceding claims 35 to 37, **characterized in that** the blocking device (8) is released by the drive motor (3) of the seat-belt tensioner (1) by the drive motor (3) being operated in the seat-belt-unrolling direction.

39. The seat-belt tensioner as claimed in one of the preceding claims 35 to 38, **characterized in that** the blocking device (8) has a latching pawl (81) which can be brought into a first and into a second pawl position, the first pawl position blocking the seat-belt spindle (5) in the seat-belt-unrolling direction, and the second pawl position releasing the seat-belt spindle (5) in the seat-belt-unrolling direction.

40. The seat-belt tensioner as claimed in one of the preceding claims 35 to 39, **characterized in that** the latching pawl (81) is held pivotably and resiliently.

41. The seat-belt tensioner as claimed in claim 40, **characterized in that** the latching pawl (81) is held in such a manner that, when there is a predetermined seat-belt-extraction force which bears against the shoulder of the vehicle occupant and is preferably between 1000 N and 3000 N, said latching pawl is pivoted from the first pawl position into the second pawl position.

42. The seat-belt tensioner as claimed in either of the preceding claims 40 and 41, **characterized in that** the latching pawl (81) is held pivotably and resiliently in such a manner that it can be pivoted back from the second pawl position into the first pawl position with the aid of the driving force of the drive motor (3).

43. The seat-belt tensioner as claimed in one of the preceding claims 39 to 42, **characterized in that** the pivot pin (82) of the latching pawl (81) is arranged in an elongated hole (83) of the latching pawl (81) in such a manner that the latching pawl (81) can be pivoted in a direction of rotation about the pivot pin (82) and can be deflected radially to the pivot pin (82) along the guide slot formed by the elongated hole (83).

## Revendications

1. Prétensionneur (1) pour un système de ceinture de sécurité, comprenant un moteur d'entraînement (3) et une transmission en liaison avec le moteur d'entraînement (3) et avec une broche de ceinture (5) du système de ceinture de sécurité, **caractérisé en ce que**, entre la transmission (4) et la broche de ceinture (5) est agencé un accouplement anti-surcharge (100) qui transmet des couples de rotation jusqu'à un couple de rotation maximum prédéterminé et qui désaccouple lors du dépassement du couple de rotation maximum.

2. Prétensionneur selon la revendication 1, **caractérisé en ce que** l'accouplement anti-surcharge (100) comprend deux éléments de couplage (105, 110) qui, dans l'état accouplé de l'accouplement anti-surcharge, établissent une liaison à coopération de forces entre la transmission (4) et la broche de ceinture (5) et qui, dans l'état désaccouplé de l'accouplement anti-surcharge (100), présentent un glissement.

3. Prétensionneur selon l'une des revendications 1 ou 2, **caractérisé en ce que** le premier élément de couplage est formé par un cône intérieur (106) et le deuxième élément de couplage est formé par un cône extérieur (110) maintenu en coopération de forces dans le cône intérieur (106).

4. Prétensionneur selon l'une des revendications précédentes, **caractérisé en ce que** le prétensionneur (1) est totalement réversible.

5. Prétensionneur selon l'une des revendications précédentes, **caractérisé en ce que** la transmission est une transmission mécanique automatique (4) qui entre en fonctionnement de façon autonome en fonction de la charge.

6. Prétensionneur selon la revendication 5, **caractérisé en ce que** la transmission automatique (4) comprend un premier trajet de transmission de force (6) pour un premier rapport avec une première démultiplication, et au moins un autre trajet de transmission de force (7) pour un deuxième rapport avec une démultiplication plus élevée par rapport à la première démultiplication.

7. Prétensionneur selon la revendication 6, **caractérisé en ce que** la transmission automatique comprend une (4) roue dentée (10) de liaison entraînée par le moteur d'entraînement (3) du prétensionneur, laquelle coopère aussi bien avec le premier qu'avec le deuxième trajet de transmission de force (6, 7).

8. Prétensionneur selon l'une des revendications précédentes 6 ou 7, **caractérisé en ce que** le premier trajet de transmission de force (6) comprend un accouplement à glissement (R) qui désaccouple lors du dépassement d'un couple de coupure prédéterminé, et **en ce que** par suite l'autre trajet de transmission de force (7) est activé.

9. Prétensionneur selon la revendication 8, **caractérisé en ce que** le couple de coupure prédéterminé de l'accouplement à glissement (R) est choisi de telle façon que celui-ci correspond à une force appliquée par la ceinture au niveau de l'épaule de l'occupant du véhicule entre 200 et 250 Newton.

10. Prétensionneur selon l'une des revendications précédentes 6 à 9, **caractérisé en ce que** le premier trajet de transmission de force (6) comprend l'accouplement un glissement (R), une roue d'accouplement (62) en liaison avec l'accouplement à glissement, et une couronne dentée d'accouplement de broche (61) en liaison avec la broche de ceinture (5) et avec la roue d'accouplement (62).

11. Prétensionneur selon l'une des revendications précédentes 8 à 10,
**caractérisé en ce que** :
- l'accouplement à glissement (R) comprend un porte-loquet (64) qui est monté rotatif coaxialement avec la roue dentée de liaison (10), et
- sur le porte-loquet (64) est monté un loquet d'accouplement à glissement (65) en pivotement de telle façon que celui-ci peut être pivoté dans une position d'accouplement et dans une position de désaccouplement.

12. Prétensionneur selon la revendication 11, **caractérisé en ce que** le loquet d'accouplement à glissement (65) dans sa position d'accouplement couple le porte-loquet (64) et la roue dentée de liaison (10) dans la direction de rotation de prétensionnement (S) de la ceinture, et dans sa position de désaccouplement, celui-ci est sans effet vis-à-vis de l'accouplement entre la roue dentée de liaison (10) et le porte-loquet (64).

13. Prétensionneur selon l'une des revendications précédentes 11 ou 12, **caractérisé en ce que** l'accouplement à glissement (R) comprend un disque de commande (63) qui empêche, après que le loquet d'accouplement à glissement (65) a atteint sa position de désaccouplement, que celui-ci parvienne de façon autonome de nouveau dans la position d'accouplement.

14. Prétensionneur selon la revendication 13, **caractérisé en ce que** le disque de commande (63) et le porte-loquet (64) sont susceptibles de tourner l'un par rapport à l'autre d'un angle de rotation prédéterminé.

15. Prétensionneur selon la revendication 14, **caractérisé en ce que**, dès que le loquet d'accouplement à glissement (65) a atteint sa position de désaccouplement, le disque de commande (63) est tourné par un ressort (642) vers une position de blocage dans laquelle il maintient le loquet d'accouplement à glissement (65) dans la position de désaccouplement.

16. Prétensionneur selon l'une des revendications précédentes 8 à 15, **caractérisé en ce que** l'accouplement à glissement (R) comprend, en plus du premier loquet d'accouplement à glissement (65), un deuxième loquet d'accouplement à glissement (69) qui assiste le premier loquet d'accouplement à glissement (65).

17. Prétensionneur selon la revendication 16, **caractérisé en ce que** le deuxième loquet d'accouplement à glissement (69) est monté en pivotement sur le porte-loquet (64).

18. Prétensionneur selon l'une des revendications précédentes 16 ou 17, **caractérisé en ce que** le premier et le deuxième loquet d'accouplement à glissement (65, 69) sont mis sous précontrainte par le même ressort de pivotement (641) dans la direction d'engagement par rapport à la roue dentée de liaison (10).

19. Prétensionneur selon l'une des revendications précédentes 14 à 18, **caractérisé en ce que** le disque de commande (63) est réalisé de telle façon que, lors d'une rotation de la transmission automatique (4), celui-ci est tourné tout d'abord dans la direction de déroulement (A) de la ceinture et en succession dans la direction de rotation de prétensionnement de la ceinture, hors de la position de blocage, grâce à quoi le premier loquet d'accouplement à glissement (65) est ramené dans sa position de couplage.

20. Prétensionneur selon l'une des revendications précédentes, **caractérisé en ce que** la broche de ceinture (5) et la transmission automatique (4) sont reliées au moyen d'un accouplement de broche (51).

21. Prétensionneur selon la revendication 20, **caractérisé en ce que** l'accouplement de broche (51) accouple lors d'une rotation du moteur d'entraînement (3) dans la direction de rotation de prétensionnement de la ceinture, et désaccouple lors d'une rotation du moteur d'entraînement (3) dans la direction de rotation de déroulement de la ceinture.

22. Prétensionneur selon l'une des revendications précédentes 20 ou 21, **caractérisé en ce que** l'accouplement de broche (51) comprend des loquets d'accouplement de broche (52).

23. Prétensionneur selon la revendication 22, **caractérisé en ce que** :
- les loquets d'accouplement de broche (52) sont agencés de telle manière qu'ils s'engagent dans une denture à loquet (54) de la broche de ceinture (5), dès que la couronne dentée d'accouplement de broche (61) tourne dans la direction de rotation de prétensionnement de la ceinture, grâce à quoi la broche de ceinture (5) et la couronne dentée d'accouplement de broche (61) s'accouplent l'une à l'autre de façon solidaire en rotation, et/ou
- **en ce que** les loquets d'accouplement de broche (52) sont agencés de telle manière qu'ils sont pivotés hors de la denture à loquet (54) de la broche de ceinture (5) quand la couronne dentée d'accouplement de broche (61) tourne dans la direction de déroulement de la ceinture, suite à quoi la liaison entre la broche de ceinture (5) et la couronne dentée d'accouplement de broche (61) est interrompue.

24. Prétensionneur selon l'une des revendications précédentes 20 à 23, **caractérisé en ce que** l'accouplement de broche (51) comprend un loquet de synchronisation (55) qui s'engage dans la denture à loquet (54) de la broche de ceinture (5), grâce à quoi la broche de ceinture (5) et la couronne dentée d'accouplement de broche (61) sont orientées l'une vis-à-vis de l'autre avant que les loquets d'accouplement de broche (52) de l'accouplement de broche (51) s'engagent dans la denture à loquet (54) de la broche de ceinture (5).

25. Prétensionneur selon la revendication 24, **caractérisé en ce que** les loquets d'accouplement de broche (52) et le loquet de synchronisation (55) sont maintenus en pivotement dans un boîtier d'accouplement de broche (53).

26. Prétensionneur selon la revendication 25, **caractérisé en ce que** le boîtier d'accouplement de broche comprend au moins un emplacement de fixation (531) destiné à la fixation en rotation d'au moins une roue planétaire (714) d'un mécanisme à planétaires (71).

27. Prétensionneur selon la revendication 26, **caractérisé en ce que** les emplacements de fixation (531) sont formés par des goupilles sur lesquelles les roues planétaires (714) du mécanisme à planétaires (71) sont montées en rotation.

28. Prétensionneur selon l'une des revendications précédentes, **caractérisé en ce que** la transmission automatique (4) comprend un mécanisme à planétaires (71).

29. Prétensionneur selon la revendication 28, **caractérisé en ce que** le mécanisme à planétaires (71) est agencé dans l'autre trajet de transmission de force (7).

30. Prétensionneur selon la revendication 29, **caractérisé en ce que** le mécanisme à planétaires (71) se déplace conjointement et sans transmission de force lorsque l'accouplement à glissement (R) est accouplé et, lorsque l'accouplement à glissement (R) est désaccouplé, il est utilisé pour la transmission de force et fournit le deuxième rapport de la transmission automatique (4).

31. Prétensionneur selon l'une des revendications précédentes 28 à 30, **caractérisé en ce que** le mécanisme à planétaire (71) comprend une couronne creuse (713) qui est reliée à au moins une roue planétaire (714) entraînée par une roue solaire intérieure (712).

32. Prétensionneur selon la revendication 31, **caractérisé en ce que** le mécanisme à planétaire (71) comprend une roue solaire extérieure (711) qui est entraînée par la roue dentée de liaison (10) et qui est reliée solidairement en rotation à la roue solaire intérieure (712).

33. Prétensionneur selon l'une des revendications précédentes 31 ou 32, **caractérisé en ce que** le mécanisme à planétaires (71) comprend un loquet d'accouplement de planétaire (715), qui coopère avec la couronne creuse (713) et qui permet une rotation de la couronne creuse (713) le long d'un sens de rotation prédéterminé de la couronne creuse et qui bloque une rotation de la couronne creuse à l'encontre du sens de rotation prédéterminé de la couronne creuse.

34. Prétensionneur selon la revendication 33, **caractérisé en ce que** le loquet d'accouplement de planétaire (715) est pivoté contre la couronne creuse (713) par un ressort de loquet d'accouplement de planétaire (716).

35. Prétensionneur selon l'une des revendications précédentes, **caractérisé en ce que** le prétensionneur comprend un dispositif de verrouillage (8) qui, après l'achèvement du processus de prétensionnement, arête la broche de ceinture (5) dans la position tendue.

36. Prétensionneur selon la revendication 35, **caractérisé en ce que** le dispositif de verrouillage (8) est conçu de telle façon qu'il est libérable sans augmenter la force de maintien exercée par la ceinture sur l'occupant du véhicule.

37. Prétensionneur selon l'une des revendications précédentes 35 ou 36, **caractérisé en ce que** le dispositif de verrouillage (8) est libérable au moyen du moteur d'entraînement (3) du prétensionneur (1).

38. Prétensionneur selon l'une des revendications précédentes 35 à 37, **caractérisé en ce que** le dispositif de verrouillage (8) est libéré au moyen du moteur d'entraînement (3) du prétensionneur (1) du fait que le moteur d'entraînement (3) est mis à fonctionner dans la direction de déroulement de la ceinture.

39. Prétensionneur selon l'une des revendications précédentes 35 à 38, **caractérisé en ce que** le dispositif de verrouillage (8) comprend un loquet d'enclenchement (81) qui peut être amené dans une première et dans une deuxième position de loquet, la première position de loquet bloquant la broche de ceinture (5) dans la direction de déroulement de la ceinture, et la deuxième position de loquet libérant la broche de ceinture (5) dans la direction de déroulement de la ceinture.

40. Prétensionneur selon l'une des revendications précédentes 35 à 39, **caractérisé en ce que** le loquet d'enclenchement (81) est maintenu en pivotement et sous l'effet d'un ressort.

41. Prétensionneur selon la revendication 40, **caractérisé en ce que** le loquet d'enclenchement (81) est tenu de telle façon qu'en présence d'une force d'extraction de ceinture prédéterminée appliquée au niveau de l'épaule de l'occupant du véhicule, de préférence entre 1000 Newton et 3000 Newton, il est pivoté de la première position de loquet vers la deuxième position de loquet.

42. Prétensionneur selon l'une des revendications précédentes 40 ou 41, **caractérisé en ce que** le loquet d'enclenchement (81) est maintenu en pivotement et avec effet ressort de telle façon qu'il peut être pivoté en retour de la deuxième position de loquet vers la première position de loquet à l'aide de la force d'entraînement du moteur d'entraînement (3).

43. Prétensionneur selon l'une des revendications précédentes 39 à 42, **caractérisé en ce que** l'axe de pivotement (82) du loquet d'enclenchement (81) est agencé dans un trou oblong (83) du loquet d'enclenchement (81) de telle façon que le loquet d'enclenchement (81) est capable de pivoter dans un sens de rotation autour de l'axe de pivotement (82) et d'être dévié radialement par rapport à l'axe de pivotement (82) le long de la coulisse de guidage formée par le trou oblong (83).
